# EUROPEAN PATENT APPLICATION

(11) **EP 4 792 682 A1**
(43) Date of publication of application: **19.08.2026**
(21) Application number: 26158557.4
(22) Date of filing: 13.02.2026
(51) Int. Cl.: A41D 13/018, A43B 13/20, A42B 3/04, A41D 13/015

(54) **WEARABLE PROTECTION DEVICE AND ITS USE IN A GERMENT**

(30) Priority: 14.02.2025 IT 202500002931
(71) Applicant: D-Air Lab S.r.l., 36100 Vicenza (IT)
(72) Inventor: PICCINOTTI, Alberto, 36040 Sarego (VI) (IT); LANARO, Claudio, 36064 Colceresa (VI) (IT); PARISE, Nicola, 36063 Marostica (VI) (IT)
(74) Representative: PGA S.p.A.

(57) **Abstract**

The present disclosure relates to a wearable protection device (1) comprising: a bladder (2) comprising a plurality of segments (2') configurable between a deflated condition and an inflated condition, and a casing (3) comprising a first and a second covering of sheet material joined together at a peripheral portion to define a compartment (V) in which the plurality of segments is housed. At least one of said segments is secured, at a part of a peripheral engagement portion, to the first covering (4) at a zone spaced from the peripheral portion of the casing (3).

## Description

### TECHNICAL FIELD

The present disclosure relates to a protection device and to a method for manufacturing the same. The protection device may be wearable and suitable for use in sports or occupational environments to protect a user's body from impacts, for example in the event of an accident. The protection device may be inserted into, attached to, or integrated with technical sports apparel, such as jackets, vests, and suits for motorcycling and motorsport applications. The protection device may also be provided as a standalone protective article, for example a knee pad, back protector, or protection for the head, neck, or chest. In addition, the protection device may be used in transport products, such as backpacks, bags, or the like.

### BACKGROUND ART

Wearable protection devices are known that include an inflatable bladder configured to be activated under specific conditions to protect a user's body from impacts or falls. The inflatable bladder comprises two layers of sheet material that are sealed to one another along a peripheral edge.

In a first example, the bladder is arranged within a pocket of a garment such that, in a deflated state, a first layer of the bladder directly faces an inner layer of the garment and a second, opposite layer of the bladder directly faces an outer layer of the garment. The bladder is generally positioned to protect vital areas of the human body (e.g., the cervical region, hips, thorax, and spinal column) and is placed in fluid communication with a gas generator. To keep the bladder in position within the garment, it is known to provide two or more attachment portions of the bladder that are secured directly to seams of the garment.

In a further example, BE871261A discloses an inflatable footrest cushion for shoes. Specifically, the inflatable footrest cushion comprises two layers of woven fiber material sealed together at the periphery and at internal points to form interconnected chambers that provide orthopedic support and cushioning.

Although the known protection devices described above are used to protect users, the Applicant has observed that they may be improved in several respects.

### OBJECT OF THE DISCLOSURE

The object of the present disclosure is to address at least one of the drawbacks and/or limitations of the prior art solutions.

A first object of the present disclosure is to provide a safe protection device capable of protecting a user from impacts. It is also an object of the present disclosure to provide a protection device having a structure that ensures correct positioning when worn by a user or when engaged with a garment, thereby ensuring correct functioning of the protection device.

It is a further object of the present disclosure to provide a protection device suitable for protecting different parts of a user's body. A further object of the present disclosure is to provide a method for manufacturing a protection device that is simple and quick while at the same time ensuring correct assembly of the protection device so as to prevent any malfunctions.

These objects, and others that will become more apparent from the following description, are substantially achieved by a protection device and a method for manufacturing the same according to one or more of the accompanying claims and/or aspects.

### SUMMARY

In a 1st aspect, a wearable protection device (1) is provided comprising:
- at least one bladder (2) comprising a plurality of segments (2') side-by-side to each other, each of which extends along a respective extension trajectory, wherein each segment (2') comprises at least one wall of sheet material delimiting an internal volume and having a first and a second portion facing each other, wherein the bladder (2), in particular at least one of said segments (2'), further comprises one or more peripheral engagement portions, wherein the bladder (2) is configurable between:
   - a deflated condition in which the first and second portion of the at least one wall of each segment (2'), for a preponderant part of their surface extension, are close together and at least partly in contact with each other,
   - an inflated condition in which the first and second portion of the at least one wall of each segment (2'), for a preponderant part of their surface extension, are spaced apart, wherein said at least one wall, in the inflated condition, defines an internal volume greater than the internal volume defined by the same wall in the deflated condition,
- at least one casing (3) comprising a first and a second covering (4, 5) of sheet material joined together at a peripheral portion of the casing to define a compartment (V) in which the plurality of segments is housed.

In a 2nd aspect according to the preceding aspect, at least a part of the peripheral engagement portion of at least one segment of the bladder (2) is secured to, or in proximity to, at least one of said first and second covering (4, 5).

In aspect 2bis according to any one of the preceding aspects, the bladder (2) is secured to the casing (3) by sewing. In aspect 2ter, each segment, at least in the inflated condition, extends along a respective extension trajectory, wherein the trajectories of two immediately adjacent segments are: inclined relative to each other at an angle of less than 30°, optionally less than 20°, or substantially parallel to each other.

In a 3rd aspect according to any one of the preceding aspects, each segment of the bladder (2) comprises at least two peripheral engagement portions opposite with respect to the internal volume of the respective segment.

In a 5th aspect according to any one of the preceding aspects, each segment is secured to the first covering (4). In a 6th aspect according to any one of the preceding aspects, each segment, in correspondence of at least one of said peripheral engagement portions, is solely secured to the first and/or second covering (4, 5).

In an aspect 6bis according to any one of the preceding aspects, at least one of said segments is secured, at a part of the peripheral engagement portion, to the first covering (4) at a zone spaced from the peripheral portion of the casing (3). In an aspect 6ter according to any one of the preceding aspects, each segment is secured, at a part of the peripheral engagement portion, to the first covering (4) at a zone spaced from the peripheral portion of the casing (3).

In an aspect 6quater according to any one of the preceding aspects, each segment has a part of the peripheral engagement portion spaced from the peripheral portion of the casing which is secured, optionally by sewing, to the first covering (4).

In an aspect 6quinquies according to any one of the preceding aspects, the part of the peripheral engagement portion of each segment, spaced from the peripheral portion of the casing, is solely secured, optionally by sewing, to the first covering (4).

In an aspect 6sexies according to any one of the preceding aspects, two side-by-side segments have respective sections of the peripheral engagement portion facing each other, wherein said facing sections of the peripheral engagement portions of the side-by-side segments are secured, optionally by sewing, to the first covering (4), optionally solely to the first covering (4) of the casing (3).

In an aspect 6septies according to the preceding aspect, said facing sections of the peripheral engagement portions of the side-by-side segments are secured, optionally by sewing, to the first covering (4) at a zone spaced from the peripheral portion of the casing (3).

In an aspect 6octies according to any one of the preceding aspects, the peripheral engagement portion of each segment secured to the first covering (4) at a zone spaced from the peripheral portion of the casing (3), is not secured to the second covering (5).

In an aspect 6novies according to any one of the three preceding aspects, the facing sections of the peripheral engagement portions of the side-by-side segments that are secured to the first covering (4) at a zone spaced from the peripheral portion, are not secured to the second covering (5).

In an aspect 6decies according to any one of the preceding aspects, the peripheral engagement portion of each segment extends substantially along a rectilinear direction.

In a 7th aspect according to any one of the preceding aspects, the at least one wall of each segment comprises a first wall (2a) and a second wall (2b) of sheet material.

In an 8th aspect according to the preceding aspect, the first wall (2a) has a central zone, which defines said first portion of the at least one wall.

In a 9th aspect according to any one of the two preceding aspects, the second wall (2b) has a central zone, which defines said second portion of the at least one wall.

In a 10th aspect according to any one of the three preceding aspects, the first and the second wall (2a, 2b) of each segment are engaged with each other at a peripheral edge (2c).

In an 11th aspect according to any one of the four preceding aspects, each segment is constituted solely by the first and second wall (2a, 2b) engaged with each other at a peripheral edge (2c).

In a 12th aspect according to any one of the five preceding aspects, the first and the second wall (2a, 2b) delimit the internal volume of the respective segment.

In a 13th aspect according to any one of the three preceding aspects, each segment is secured, at a part of the peripheral edge (2c), solely to the first covering (4), optionally at a zone spaced from the peripheral portion of the casing (3).

In a 14th aspect according to any one of the four preceding aspects, the peripheral edge (2c) of each segment has a first and a second section (2c', 2c") opposite to each other, wherein the first section (2c') of a segment is at least partly facing the second section (2c") of an adjacent segment, wherein at least a part of at least one of said first and second section (2c', 2c") facing each other are secured, optionally by sewing, to the first covering (4).

In an aspect 14bis according to the preceding aspect, a preponderant part of the first section (2c') of a segment facing the second section (2c") of an adjacent segment, is secured to the first covering (4), optionally solely to the first covering (4) at a zone spaced from the peripheral portion of the casing (3).

In a 15th aspect according to any one of the two preceding aspects, the entire first section (2c') of a segment facing the second section (2c") of an adjacent segment, is secured to the first covering (4), optionally solely to the first covering (4) at a zone spaced from the peripheral portion of the casing (3).

In a 16th aspect according to any one of the four preceding aspects, a preponderant part of the second section (2c") of a segment facing the first section (2c') of an adjacent segment, is secured to the first covering (4), optionally solely to the first covering (4) at a zone spaced from the peripheral portion of the casing (3).

In a 17th aspect according to any one of the five preceding aspects, the entire second section (2c") of a segment facing the first section (2c') of an adjacent segment, is secured to the first covering (4), optionally solely to the first covering (4) at a zone spaced from the peripheral portion of the casing (3).

In an 18th aspect according to any one of the six preceding aspects, the first and second section (2c', 2c") of the peripheral edge extend substantially along the extension trajectory of the respective segment, optionally rectilinear.

In a 19th aspect according to any one of the preceding aspects, each segment is secured to, or in proximity to, the first covering (4) at:
- a single continuous portion of the peripheral edge (2c), or
- one or more spaced portions of the peripheral edge.

In a 20th aspect according to any one of the preceding aspects, the bladder (2) is made of a deformable material. In an aspect 20bis according to any one of the preceding aspects, the bladder (2) is elastically deformable. In a 21st aspect according to any one of the preceding aspects, the bladder (2) is made at least in part of plastic material, optionally a film of plastic material. In a 22nd aspect according to any one of the preceding aspects, the bladder (2) defines a gas-impermeable structure. In a 23rd aspect according to any one of the preceding aspects, the at least one wall is gas-impermeable. In a 24th aspect according to any one of the aspects from the 7th to the 23rd, the first wall (2a) of each segment of the bladder (2) is gas-impermeable. In a 25th aspect according to any one of the aspects from the 7th to the 24th, the second wall (2b) of each segment of the bladder (2) is gas-impermeable.

In a 26th aspect according to any one of the preceding aspects, the bladder (2) is made at least in part of at least one of the following materials: polyurethane, PVC, EVA, polyethylene, polypropylene, silicone rubber, rubber.

In a 27th aspect according to any one of the aspects from the 7th to the 26th, at least part of the first and second wall (2a, 2b) of each segment of the bladder (2) is made at least in part of at least one of the following materials: polyurethane, PVC, EVA, polyethylene, polypropylene, silicone rubber, rubber.

In a 28th aspect according to any one of the aspects from the 7th to the 27th, each of said first and second wall (2a, 2b) of each segment of the bladder (2) is constituted by a single film of single-layer plastic material.

In a 29th aspect according to any one of the aspects from the 7th to the 28th, each of said first and second wall (2a, 2b) of each segment of the bladder (2) is entirely made of polyurethane, PVC, EVA, polyethylene, polypropylene, silicone rubber, rubber.

In an aspect 29bis according to any one of the preceding aspects, the material of the bladder (2) has an elongation percentage greater than 50%, optionally greater than 200%.

In an aspect 29ter according to any one of the preceding aspects, the material of the bladder (2) has an elastic modulus of less than 70 MPa, optionally greater than 60 MPa, even more optionally comprised between 10 and 50 MPa.

In a 30th aspect according to any one of the preceding aspects, the bladder (2), during the transition from the deflated condition to the inflated condition, is configured to deform elastically.

In a 31st aspect according to any one of the aspects from the 7th to the 30th, at least one between the first and the second wall (2a, 2b) of each segment of the bladder (2), during the transition from the deflated condition to the inflated condition, are configured to deform elastically.

In an aspect 31bis according to any one of the aspects from the 7th to the 31st, the first wall (2a), during the transition of the bladder from the deflated condition to the inflated condition, is configured to deform elastically to a lesser extent than the elastic deformation of the second wall (2b).

In an aspect 31ter according to any one of the preceding aspects, the bladder (2) is at least in part counter-shaped to an internal surface delimiting the compartment of the casing (3).

In an aspect 31quater according to any one of the preceding aspects, the bladder (2), in the inflated condition and in the deflated condition, is configured to occupy substantially the entire internal volume of the compartment (V) of the casing (3).

In an aspect 31quinquies according to any one of the preceding aspects, the bladder (2), in the deflated condition, defines a substantially slab-like structure (optionally uni-planar).

In an aspect 31sexies according to any one of the preceding aspects, the bladder (2), during the transition from the deflated condition to the inflated condition, is configured to deform substantially elastically.

In an aspect 31septies according to any one of the preceding aspects, the first and the second wall (2a, 2b) of the bladder, during the transition from the deflated condition to the inflated condition, are configured to deform substantially elastically.

In an aspect 31octies according to any one of the preceding aspects, the bladder (2), in the deflated condition, is configured to occupy substantially the entire compartment (V) of the casing.

In an aspect 31novies according to any one of the preceding aspects, the bladder (2), in the inflated condition, occupies a predetermined volume, wherein the ratio between the internal volume defined by the casing, in the inflated condition of the bladder, and the predetermined volume occupied by said bladder is less than 1, optionally comprised between 0.7 and 0.97, even more optionally between 0.9 and 0.96.

In a 32nd aspect according to any one of the preceding aspects, the at least one wall of each segment of the bladder (2), according to a section along a plane orthogonal to the extension trajectory of the respective segment and at the peripheral engagement portion, defines substantially a closed perimetral edge having a predetermined length, wherein the ratio between the length of said perimetral edge in the inflated condition of the bladder (2) and the length of the same perimetral edge in the deflated condition of the bladder (2) is greater than 1.1, optionally is comprised between 1.6 and 4.5 including the extremes.

In a 33rd aspect according to any one of the aspects from the 7th to the 32nd, the first and second wall (2a, 2b) of each segment are engaged with one another at the peripheral edge (2c) in a fluid-tight manner, in particular the peripheral edge is configured to substantially prevent the passage of gas.

In a 34th aspect according to any one of the aspects from the 7th to the 33rd, the first and the second wall (2a, 2b) of each segment of the bladder (2) are engaged with one another at the peripheral edge (2c) by means of at least one of: bonding, welding.

In a 35th aspect according to any one of the aspects from the 7th to the 34th, the first and the second wall (2a, 2b) of each segment of the bladder (2) are welded, optionally heat-welded, together to define the peripheral edge.

In a 36th aspect according to any one of the aspects from the 7th to the 35th, the first and the second wall (2a, 2b) of each segment of the bladder (2) are engaged with each other at the peripheral edge (2c) by means of at least one of the following processes: hot pressing, high-frequency welding, ultrasonic welding.

In a 37th aspect according to any one of the preceding aspects, each segment has a substantially elongated conformation, optionally extending along the extension trajectory.

In a 38th aspect according to any one of the preceding aspects, two immediately side-by-side segments have substantially the same length; optionally said length is measured along the extension trajectory.

In a 39th aspect according to any one of the preceding aspects, each segment has a length measured along the extension trajectory.

In a 40th aspect according to the preceding aspect, the length of each segment is greater than 50 mm, optionally comprised between 100 and 600 mm.

In a 41st aspect according to any one of the preceding aspects, the at least one wall of each segment of the bladder (2), according to a section along a plane orthogonal to the extension trajectory of the respective segment and at the peripheral engagement portion, defines substantially a closed perimetral edge having a predetermined length.

In a 42nd aspect according to the preceding aspect, said length of the closed perimetral edge, in the deflated condition of the bladder, is comprised between 100 and 600 mm, optionally between 110 and 170 mm.

In a 43rd aspect according to any one of the two preceding aspects, said length of the closed perimetral edge, in the inflated condition of the bladder, is comprised between 100 and 1200 mm, optionally between 150 and 350 mm.

In a 44th aspect according to the 42nd or 43rd aspect, the length of a segment measured along the extension trajectory is greater than the length of the closed perimetral edge of the same segment.

In a 45th aspect according to any one of the aspects from the 42nd to the 44th, the ratio between the length of a segment, measured along the extension trajectory, and the length of the closed perimetral edge of the same segment, in the deflated condition of the bladder, is greater than 1.1, optionally comprised between 1.2 and 3.5.

In a 46th aspect according to any one of the preceding aspects, two facing sections of two distinct peripheral edges of two immediately adjacent segments of the bladder (2), in the deflated condition of said segments, are placed at a predetermined distance (D1).

In a 47th aspect according to the preceding aspect, said predetermined distance (D1) is equal to or greater than 10 mm, optionally comprised between 30 mm and 100 mm.

In a 48th aspect according to any one of the preceding aspects, two facing sections of two distinct peripheral edges of two immediately adjacent segments of the bladder (2), in the inflated condition of said segments, are placed at a predetermined distance (D2).

In a 49th aspect according to the preceding aspect, said predetermined distance (D2) is equal to or greater than 10 mm, optionally comprised between 30 mm and 100 mm.

In a 50th aspect according to the 48th or 49th aspect, the predetermined distance (D1) present between two sections of the peripheral edges when the bladder is in the deflated condition is substantially equal to the predetermined distance (D2) of the same sections when the bladder is in the inflated condition.

In a 51st aspect according to any one of the preceding aspects, the first and the second section of the peripheral edge of a segment are placed, in the deflated condition of the bladder, at a minimum distance from one another.

In a 52nd aspect according to the preceding aspect, said minimum distance is equal to or lower than 50 mm, optionally comprised between 30 mm and 10 mm.

In a 53rd aspect according to any one of the preceding aspects, the first and the second section of the peripheral edge of a segment are placed, in the inflated condition of the bladder, at a minimum distance from one another.

In a 54th aspect according to the preceding aspect, the minimum distance is equal to or lower than 50 mm, optionally comprised between 30 mm and 10 mm.

In a 55th aspect according to the aspect, any one of the two preceding aspects, the minimum distance between the first and the second section of the peripheral edge, in the inflated condition of the bladder, is substantially identical to the minimum distance between the same first and second section of the same peripheral edge in the deflated condition of the bladder (2).

In a 56th aspect according to any one of the preceding aspects, a preponderant part of the peripheral edge (2c) of each segment is configured not to substantially vary its position with respect to the first covering (4) of the casing (3), during the transition of the bladder (2) from the deflated condition to the inflated condition.

In a 57th aspect according to any one of the preceding aspects, the portion of peripheral edge (2c) of a segment secured, optionally by sewing, to the first covering (4) at a zone spaced from the peripheral portion of the casing (3) is configured to vary its distance solely with respect to the second covering (5) during the transition of the bladder (2) from the deflated condition to the inflated condition.

In a 58th aspect according to any one of the preceding aspects, the portion of peripheral edge (2c) of a segment secured, optionally by sewing, to the first covering (4) at a zone spaced from the peripheral portion of the casing (3) is configured to remain in contact with said first covering (4) during the transition of the bladder (2) from the deflated condition to the inflated condition.

In a 59th aspect according to any one of the preceding aspects, at least one section of the peripheral edge (2c) of each segment, in the deflated condition of the bladder (2), is configured to contact the second covering (5) of the casing (3). In an aspect 59bis according to any one of the preceding aspects, the first portions of the plurality of segments in the inflated condition and in the deflated condition of the bladder (2) are spaced from each other.

In an aspect 59ter according to any one of the preceding aspects, the second portions of the plurality of segments, in the deflated condition of the bladder (2), are spaced from each other.

In an aspect 59quater according to any one of the preceding aspects, a part of the second portion of a segment, in the inflated condition of the bladder (2), is at least partly facing a part of a second portion of an adjacent segment.

In an aspect 59quinquies according to any one of the preceding aspects, the bladder (2) has, in the deflated condition, a first surface extension smaller than a second surface extension defined by the same bladder when in the inflated condition.

In an aspect 59sexies according to the preceding aspect, the ratio between the second surface extension and the first surface extension of the bladder is greater than 1.5, optionally comprised between 2 and 7, even more optionally between 2 and 6.

In a 60th aspect according to any one of the preceding aspects, the bladder (2) has a number of segments equal to or greater than 2, optionally comprised between 2 and 30 including the extremes.

In a 61st aspect according to any one of the preceding aspects, the bladder (2) comprises:
- at least a first series of segments comprising two or more segments side-by-side with each other,
- at least a second series of segments comprising two or more segments side-by-side with each other.

In a 62nd aspect according to the preceding aspect, the segments of the first series, in the inflated condition, have substantially parallel extension trajectories.

In a 63rd aspect according to the 61st or 62nd aspect, the segments of the second series, in the inflated condition, have substantially parallel extension trajectories.

In a 64th aspect according to any one of the aspects from the 61st to the 63rd, the segments of the first series and the segments of the second series, in the inflated condition of the segments of both series, are spaced from each other. In a 65th aspect according to any one of the preceding aspects, the plurality of segments of the bladder (2) is in fluid communication.

In a 66th aspect according to any one of the preceding aspects, the bladder (2) comprises at least one connecting section (20) that places in fluid communication the plurality of side-by-side segments.

In a 67th aspect according to the preceding aspect, the plurality of side-by-side segments emerge from a same side of the connecting section (20) of the bladder (2).

In a 68th aspect according to the 66th or 67th aspect, the bladder (2) comprises a connecting section (20) for each series of segments.

In a 69th aspect according to any one of the aspects from the 66th to the 68th, the connecting section (20) is housed in the compartment (V) of the casing (3).

In a 70th aspect according to any one of the aspects from the 66th to the 69th, the connecting section (20) is interposed between said first and second covering (4, 5).

In a 71st aspect according to any one of the aspects from the 66th to the 70th, the connecting section (20) comprises at least one wall of sheet material delimiting an internal volume in fluid communication with the internal volume of a plurality of segments, wherein the connecting section (20) comprises a respective first and second portion facing each other, wherein the connecting section (20) further comprises one or more peripheral engagement portions.

In a 72nd aspect according to the preceding aspect, the connecting section (20) is inflatable and configurable between:
- a deflated condition in which the first and second portion of the at least one wall of the connecting section, for a preponderant part of their surface extension, are close together and at least partly in contact with each other,
- an inflated condition in which the first and second portion of the at least one wall of the connecting section, for a preponderant part of their surface extension, are spaced apart, wherein said at least one wall, in the inflated condition, defines an internal volume greater than the internal volume defined by the same wall of the connecting section in the deflated condition.

In a 73rd aspect according to the preceding aspect, the connecting section (20) extends along a respective extension trajectory transverse, optionally orthogonal, to the extension trajectory of the segments emerging directly from said connecting section.

In a 74th aspect according to any one of the two preceding aspects, at least one peripheral engagement portion of the connecting section (20) is secured to, or in proximity to, at least one of said first and second covering (4, 5).

In a 75th aspect according to any one of the three preceding aspects, the peripheral engagement portion of the connecting section (20) is secured, optionally by sewing, to the first and second covering (4, 5) at the peripheral portion of said casing (3).

In a 76th aspect according to any one of the preceding aspects from the 65th to the 75th, the at least one connecting section is connected to the longitudinal ends of the plurality of segments.

In a 77th aspect according to any one of the preceding aspects from the 65th to the 76th, the at least one connecting section (20) comprises a first and a second connecting section opposite each other with respect to the plurality of segments.

In a 78th aspect according to the preceding aspect, the first and second connecting section are connected to each other and placed in fluid communication by the plurality of segments.

In a 79th aspect according to any one of the preceding aspects, the first and second covering (4, 5) of the casing (3), for a preponderant part of their surface extension (optionally at least for 95% of their surface extension), are spaced from each other, optionally by interposition of the bladder (2).

In an 80th aspect according to any one of the preceding aspects, the first portion of each segment is directly facing and in contact with the first covering (4) while the second portion of each segment is directly facing and/or in contact with the second covering (5).

In an 81st aspect according to any one of the preceding aspects, the first and the second portion of each segment are respectively in contact with the first and second covering (4, 5) both in the inflated condition and in the deflated condition of the bladder (2).

In an 82nd aspect according to any one of the preceding aspects, solely the first portions of the plurality of segments, optionally the first walls (2a) of each segment, in the inflated condition and in the deflated condition of the bladder (2) are spaced from each other and in direct contact with the casing, optionally with the first covering.

In an 83rd aspect according to any one of the preceding aspects, at least one peripheral portion of the first and second covering (4, 5) of the casing (3) are secured together.

In an 84th aspect according to the preceding aspect, the peripheral portions of the first and second covering (4, 5) are secured together by sewing.

In an 85th aspect according to any one of the two preceding aspects, each of said segments of the bladder (2) is secured to the first covering (4).

In an aspect 85bis according to any one of the three preceding aspects, at least one peripheral portion of the first and second covering (4, 5) of the casing (3) are secured together by sewing, wherein at least one of said segments of the bladder (optionally at least two end segments of said plurality of segments) is sewn to the first and second covering (4, 5).

In an 86th aspect according to any one of the preceding aspects, the first covering (4), in the inflated condition and at a section connecting substantially two immediately adjacent segments, has a substantially flat conformation.

In an 87th aspect according to any one of the preceding aspects, the second covering (5), in the inflated condition and at a section connecting substantially two immediately adjacent segments, has a substantially flat conformation.

In an 88th aspect according to any one of the preceding aspects, two opposite portions of the first and second covering (4, 5), in the inflated condition and at a section connecting substantially two immediately adjacent segments, are substantially parallel to each other.

In an 89th aspect according to any one of the preceding aspects, the first and second covering (4, 5) of the casing, in the deflated condition of the bladder, are arranged in a non-tensioned condition while, in the inflated condition of the bladder (2), they are in tension.

In a 90th aspect according to any one of the preceding aspects, the casing (3) is made at least in part, optionally entirely, of sheet material permeable to gases.

In a 91st aspect according to any one of the preceding aspects, the casing (3) is made of sheet material at least in part perforated.

In a 92nd aspect according to any one of the preceding aspects, the casing (3) is made at least in part, optionally entirely, of woven material.

In a 93rd aspect according to any one of the preceding aspects, the casing (3) is made at least in part, optionally entirely, of at least one of the following materials: polyester, nylon, cotton.

In a 94th aspect according to any one of the preceding aspects, the casing (3) is deformable.

In a 95th aspect according to any one of the preceding aspects, the first covering (4) is of perforated material.

In a 97th aspect according to any one of the preceding aspects, the second covering is of woven material, optionally without holes.

In a 99th aspect according to any one of the preceding aspects, the casing has, in the deflated condition of the bladder (2), a surface extension substantially equal to the surface extension of the casing when the bladder is in the inflated condition.

In an aspect 99bis according to any one of the preceding aspects, the material of the casing (3), optionally of the first and second covering, has an elongation percentage of less than 100%, optionally less than 50%.

In an aspect 99ter according to any one of the preceding aspects, the material of the casing (3), optionally of the first and second covering, has an elastic modulus greater than 50 MPa, optionally greater than 200 MPa.

In an aspect 99quater according to any one of the preceding aspects, the material of the second covering has an elastic modulus comprised between 1500 and 3500 MPa.

In a 100th aspect according to any one of the preceding aspects, the compartment (V) of the casing (3) is closed.

In a 101st aspect according to any one of the preceding aspects, the compartment (V) of the casing has a closed internal volume.

In a 102nd aspect according to any one of the preceding aspects, the casing has a single compartment (V) delimiting a single closed internal volume.

In a 103rd aspect according to any one of the preceding aspects, the first and second covering, in at least one between the deflated and inflated condition of the bladder, are maintained at a distance, for a preponderant part of the surface extension of said coverings (for example, at least for 80%, optionally at least for 95%, of the surface extension of said coverings 4, 5) by interposition of the bladder (2).

In a 104th aspect according to any one of the preceding aspects, the first and second covering (4, 5), optionally in the deflated condition and in the inflated condition of the bladder (2), have a maximum distance from one another to define a thickness or height of the casing.

In a 105th aspect according to the preceding aspect, the height (or thickness) of the casing (3), in the deflated condition, of the bladder is less than 3 cm, optionally comprised between 0.1 and 2 cm.

In a 106th aspect according to any one of the preceding aspects, the first and second covering, in the inflated condition of the bladder (2), have a maximum distance from one another to define a thickness or height (H) of the casing (3).

In a 107th aspect according to any one of the two preceding aspects, the height (or thickness) of the casing (3), in the inflated condition of the bladder (2), is greater than the height (or thickness) of the same casing (3) when the bladder (2) is in the deflated condition.

In a 108th aspect according to any one of the three preceding aspects, the ratio between the height (or thickness) of the casing (3), in the inflated condition of the bladder (2), and the height (or thickness) of the same casing (3) when the bladder (2) is in the deflated condition is equal to or greater than 5, optionally comprised between 6 and 20.

In a 109th aspect according to any one of the four preceding aspects, the height (or thickness) of the casing (3), in the inflated condition, of the bladder, is greater than 2 cm, optionally comprised between 4 and 20 cm.

In an aspect 109bis according to any one of the preceding aspects, the casing (3), in the deflated condition of the bladder and in a condition laid out on an ideal plane, has a substantially slab-like shape.

In an aspect 109ter according to any one of the preceding aspects, the casing (3), in the deflated condition of the bladder and in a condition laid out on an ideal plane, is delimited by an external perimetral edge that delimits a first area, wherein said external perimetral edge of the casing, in the inflated condition and in a condition substantially laid out on an ideal plane, defines a second area, wherein the ratio between said second area and first area is equal to or less than 1, optionally comprised between 0.9 and 1.

In a 110th aspect according to any one of the preceding aspects, the protection device (1) comprises at least one auxiliary covering (30) arranged in the compartment (V).

In a 111th aspect according to the preceding aspect, the auxiliary covering is interposed between the external covering (5) and the bladder (2).

In a 112th aspect according to any one of the two preceding aspects, the auxiliary covering (30) is of sheet material. In a 113th aspect according to any one of the aspects from the 110th to the 112th, the auxiliary covering (30) is configured to contain the expansion of the at least one segment during the transition from the deflated condition to the inflated condition.

In a 114th aspect according to any one of the aspects from the 110th to the 113th, the auxiliary covering (30) is secured to at least one of:
- at least one peripheral engagement portion of at least one segment,
- the first covering (4) of the casing (3).

In a 115th aspect according to any one of the aspects from the 110th to the 114th, the auxiliary covering (30) is superimposed on at least one segment.

In a 116th aspect according to any one of the aspects from the 110th to the 115th, the auxiliary covering (30) is superimposed on the plurality of segments.

In a 117th aspect according to any one of the aspects from the 110th to the 116th, the auxiliary covering (30) is superimposed on a preponderant part of each segment.

In a 118th aspect according to any one of the aspects from the 110th to the 117th, the auxiliary covering (30) is in contact, optionally both in the inflated condition and in the deflated condition of the bladder, with the second portion of each segment.

In a 119th aspect according to any one of the aspects from the 110th to the 118th, the auxiliary covering (30) is in contact, both in the inflated condition and in the deflated condition of the bladder (2), with the second covering (5) of the casing.

In a 120th aspect according to any one of the aspects from the 110th to the 119th, the auxiliary covering (30) is of sheet material and has, in the deflated condition of the bladder and in a condition in which it is laid out on a plane, an external profile that delimits a predetermined surface extension.

In a 121st aspect according to the preceding aspect, the bladder (2) has, in the deflated condition and in a condition in which it is laid out on a plane, an external profile that delimits a predetermined surface extension.

In a 122nd aspect according to the preceding aspect, the ratio between an area of said predetermined surface extension of the bladder (2) and an area of the surface extension of the auxiliary covering (30) is comprised between 0.8 and 1.2, optionally between 0.9 and 1.1, even more optionally between 0.98 and 1.05.

In a 123rd aspect according to any one of the two preceding aspects, the first covering (4) of the casing (3) is of sheet material and has, in the deflated condition of the bladder and in a condition in which it is laid out on a plane, an external profile that delimits a predetermined surface extension, wherein the ratio between the area of said predetermined surface extension of the bladder (2) and an area of the surface extension of the first covering (4) is comprised between 0.8 and 1.2, optionally between 0.9 and 1.1, even more optionally between 0.98 and 1.02.

In a 124th aspect according to any one of the three preceding aspects, the second covering (5) of the casing (3) is of sheet material and has, in the deflated condition of the bladder and in a condition in which it is laid out on a plane, an external profile that delimits a predetermined surface extension, wherein the ratio between the area of said predetermined surface extension of the bladder (2) and an area of the surface extension of the second covering (5) is comprised between 0.8 and 1.2, optionally between 0.9 and 1.1, even more optionally between 0.98 and 1.02.

In a 125th aspect according to the preceding aspect, the ratio between the area of the surface extension of the first covering (4) and the area of the surface extension of the second covering (5) is comprised between 0.8 and 1.2, optionally between 0.9 and 1.1, even more optionally between 0.98 and 1.02.

In a 126th aspect according to any one of the preceding aspects from the 110th to the 125th, the auxiliary covering (30) is secured to at least a part of a peripheral engagement portion of at least one segment.

In a 127th aspect according to any one of the preceding aspects from the 110th to the 126th, the auxiliary covering (30) is secured, optionally by sewing, to a part of the peripheral engagement portion of each segment.

In a 128th aspect according to any one of the preceding aspects from the 110th to the 127th, the auxiliary covering (30) is secured to a preponderant part of (optionally to the entire) peripheral edge (2c) of each segment of the bladder (2).

In a 129th aspect according to any one of the preceding aspects from the 110th to the 128th, the auxiliary covering (30) is secured, optionally by sewing, both to the peripheral edge (2c) of each segment and to the first covering (4). In a 130th aspect according to any one of the preceding aspects from the 110th to the 129th, the auxiliary covering (30) is secured, optionally by sewing, to the first covering both at the peripheral portion and at zones of the first covering (4) spaced from the peripheral portion of the casing (3).

In a 131st aspect according to any one of the preceding aspects from the 110th to the 132nd, the auxiliary covering (30) is secured to the second covering (5).

In a 132nd aspect according to any one of the preceding aspects from the 110th to the 131st, the auxiliary covering (30) is secured to the second covering solely at the peripheral portion.

In a 133rd aspect according to any one of the aspects from the 110th to the 132nd, the auxiliary covering (30) is in contact solely with the second portion of each segment, optionally both in the inflated condition and in the deflated condition of the bladder (2).

In a 134th aspect according to any one of the aspects from the 110th to the 133rd, the auxiliary covering (30), during the transition from the deflated condition to the inflated condition of the bladder (2), is configured to allow a substantially uniform deformation of all the segments of the bladder (2).

In a 135th aspect according to any one of the aspects from the 110th to the 134th, the auxiliary covering (30) is made of elastically deformable material.

In a 136th aspect according to any one of the preceding aspects from the 110th to the 135th, the material of the bladder (2) is different from the material of the auxiliary covering.

In a 137th aspect according to any one of the preceding aspects from the 110th to the 136th, the auxiliary covering (30), optionally the material of the auxiliary covering, is less elastically deformable than the bladder, optionally than the material of the bladder.

In a 138th aspect according to any one of the preceding aspects, the auxiliary covering (30) is configured to deform elastically during the transition of the bladder from the deflated condition to the inflated condition.

In an aspect 138bis according to any one of the preceding aspects, the material of the auxiliary covering (30) has an elongation percentage lower than the elongation percentage of the bladder.

In an aspect 138ter according to any one of the preceding aspects, the material of the auxiliary covering (30) has an elongation percentage greater than 100%, optionally comprised between 120 and 250%.

In an aspect 138quater according to any one of the preceding aspects, the material of the auxiliary covering (30) has an elongation percentage greater than the elongation percentage of the material of the casing (3).

In an aspect 138quinquies according to any one of the preceding aspects, the material of the auxiliary covering (30) has an elastic modulus greater than the elastic modulus of the material of the bladder.

In an aspect 138sexies according to any one of the preceding aspects, the material of the auxiliary covering (30) is less than the elastic modulus of the material of the casing (3).

In an aspect 138septies according to any one of the preceding aspects from the 110th to the preceding aspect, at least a part of the auxiliary covering (30) is made at least in part of at least one of the following materials: nylon, polyester, polypropylene, cotton, polyurethane.

In a 139th aspect according to any one of the preceding aspects, the first and the covering (4, 5) of the casing (3), in the deflated condition of the bladder (2), are substantially superimposed on one another, optionally by interposition of the bladder (2) and even more optionally of the auxiliary covering (30).

In a 140th aspect according to any one of the preceding aspects, the first and second covering (4, 5) of the casing (3), in the deflated condition of the bladder (2), lie on respective surfaces at least in part and substantially parallel to each other.

In a 141st aspect according to any one of the preceding aspects, the first covering (4) of the casing (3), in the deflated condition of the bladder (2), lies on a surface at least in part and substantially parallel to a lying surface of the bladder. In a 142nd aspect according to any one of the preceding aspects from the 110th to the 141st, the bladder (2), in the deflated condition, lies on a surface at least in part and substantially parallel to a lying surface of the auxiliary covering (30).

In a 143rd aspect according to any one of the preceding aspects, two immediately adjacent segments of the bladder (2) delimit in cooperation with at least the second covering (4), in the inflated condition and according to a section orthogonal to the extension trajectory of at least one of said segments, at least one void zone.

In a 144th aspect according to the preceding aspect, the at least one void zone is not occupied by the bladder (2).

In a 145th aspect according to any one of the two preceding aspects, the void zone is present for a preponderant part (optionally at least 80%, even more optionally 90%) of the overall longitudinal extension of said segments.

In a 146th aspect according to any one of the three preceding aspects, the void zone, in the inflated condition and at a longitudinal mid-zone of the two adjacent segments delimiting said void zone, has a predetermined area, wherein the ratio between said predetermined area and the area of one of the segments delimiting said void zone - in the inflated condition, in section along a plane orthogonal to the extension trajectory of the respective segment, at a longitudinal mid-zone of said segment - is comprised between 0.05 and 0.3, optionally between 0.06 and 0.1.

In a 147th aspect according to any one of the four preceding aspects, said void zone is delimited by a part of the auxiliary covering (30) that covers two adjacent segments and the second covering (5).

In a 148th aspect according to any one of the five preceding aspects, the void zone has, in section according to a plane orthogonal to the extension trajectory of the two adjacent segments that delimit said void zone, a substantially triangular shape.

In a 149th aspect according to any one of the six preceding aspects, said void zone defines a first void zone (E1) of the protection device (1).

In a 150th aspect according to any one of the seven preceding aspects, the bladder (2), in the inflated condition, defines a further void zone defined by: a part of a first wall (2a) of a first segment, a part of the second wall (2b) of a second segment immediately adjacent to the first wall (2a) of a first segment and the peripheral engagement portions facing said first and second segment.

In a 151st aspect according to the preceding aspect, said further void zone defines a second void zone (E2) of the protection device.

In a 152nd aspect according to any one of the two preceding aspects, the further void zone (i.e. the second void zone E2) delimits, in section, an area smaller than the first void zone.

In a 153rd aspect according to any one of the preceding aspects, the protection device (1) comprises:
- a first void zone (E1) delimited between a first and second segment of the bladder (2) immediately adjacent and the second covering (5),
- a second void zone (E2) defined by: a part of a first wall (2a) of a first segment, a part of the second wall (2b) of a second segment immediately adjacent to the first wall (2a) of a first segment and the peripheral engagement portions facing said first and second segment.

In a 154th aspect according to the preceding aspect, each of said first and second void zone has, in section, a substantially triangular shape.

In a 155th aspect according to any one of the two preceding aspects, the first and the second void zone are opposite one another.

In a 156th aspect according to any one of the three preceding aspects, the first and second void zone defined by the same first and second immediately adjacent segment delimit a total void zone having a predetermined area, wherein said predetermined area of the total void zone is smaller than the area delimited by the first or second segment, in the inflated condition of the bladder (2).

In a 157th aspect according to any one of the four preceding aspects, the ratio between the area defined by the first or second segment and the predetermined area defined by the total void zone is comprised between 1.1 and 6, optionally between 2 and 4.

In a 158th aspect according to any one of the preceding aspects, the protection device (1) comprises an actuator (15) configured to allow the transition of the bladder (2) from the deflated condition to the inflated condition.

In a 159th aspect according to the preceding aspect, the actuator (15) comprises a pressure vessel.

In a 160th aspect according to any one of the two preceding aspects, the protection device (1) further comprises:
- an activator configured to activate the actuator to allow the transition of the bladder from the deflated condition to the inflated condition,
- a control unit connected to and active in command on the activator, wherein the control unit is configured to send a command signal to the activator for activation of the actuator.

In a 161st aspect according to the preceding aspect, the activator comprises at least one of: a pyrotechnic charge, a perforator.

In a 162nd aspect according to any one of the two preceding aspects, the protection device (1) further comprises at least one sensor configured to emit a signal representative of a condition of the user, wherein the control unit is configured to:
- receiving the signal from the sensor,
- comparing the signal received with at least one threshold value of a control parameter,
- determining, as a function of the comparison, the presence of an accident condition for the user and,
- if such accident condition is determined, sending the command signal to the activator to determine the inflated condition of the bladder.

In a 163rd aspect according to the preceding aspect, the at least one sensor comprises at least one of: a gyroscope, an accelerometer, a GPS.

In an aspect 163bis according to any one of the preceding aspects, each segment, at said one or more peripheral engagement portion, is solely secured, optionally by sewing, to the first covering (4) of the casing (3).

In an aspect 163ter according to any one of the preceding aspects, each segment, at said one or more peripheral engagement portion, is detached from the second covering (5) of the casing (3).

In an aspects 163quater according to any one of the preceding aspects, the bladder (2) is non-removably secured to the first covering (4) of the casing (3) via said one or more peripheral engagement portions.

In an aspect 163quinquies according to any one of the preceding aspects, the bladder (2) is non-removably secured to the casing (3) at the peripheral portion.

In an aspect 163sexies according to any one of the preceding aspects, the at least one wall of each segment comprises a first wall (2a) and a second wall (2b) of sheet material, wherein the first wall (2a) has a central zone, which defines said first portion of the at least one wall, wherein the second wall (2b) has a central zone, which defines said second portion of the at least one wall.

In an aspect 163septies according to the preceding aspect the first and the second wall (2a, 2b) of each segment are engaged with each other along said one or more peripheral engagement portions, each of which forming a respective peripheral edge (2c).

In an aspects 163octies according to the preceding aspect each peripheral edge (2c) of a respective one of said one or more peripheral engagement portions has a first and a second section (2c', 2c") arranged opposite one another and facing each other.

In an aspects 163novies according to any one of the two preceding aspects each peripheral edge (2c) of a respective one of said one or more peripheral engagement portions has one or more connecting segments (2c"') joining the first section (2c') to the second section (2c") at respective ends portions, optionally forming closed loop, even more optionally the closed loop being circular or annular.

In an aspect 163decies according to any one of the three preceding aspects the bladder (2) includes one or more non-inflating chambers, each of which being perimetrally delimited by a respective peripheral edge (2c).

In an aspect 163undecies according to any one of the four preceding aspects each peripheral edge (2c) has an elongated shape extending along an extension trajectory (T), optionally rectilinear.

In an aspect 163duodecies according to the preceding aspect the bladder includes a plurality of peripheral engagement portions having respective peripheral edges (2c) spaced apart from one another along a secondary direction (S) transverse, optionally orthogonal, to the extension trajectory (T).

In an aspect 163terdecies according to any one of the six preceding aspects each peripheral edge (2c) separates two adjacent segments (2') of the bladder (2).

In an aspect 163quaterdecies according to aspect 163duodecies in combination with aspect 163novies, a width of each segment (2), defined as a minimum distance between two adjacent peripheral edges (2c) along the secondary direction (S), is greater than a minimum distance between the first section (2c') and the second section (2c") of a peripheral edge (2c).

In an aspect 163quindecies according to aspect 163duodecies in combination with aspect 163novies, a width of each segment (2), defined as a minimum distance between two adjacent peripheral edges (2c) along the secondary direction (S), is less than the minimum distance between the first section (2c') and the second section (2c") of a peripheral edge (2c).

In an aspect 163sedecies according to any one of the preceding aspects, the casing (3), and optionally the first covering (4), is more rigid than the bladder (2), thereby having a lower capacity for elastic deformation than the bladder (2).

In an aspect 163septiesdecies according to any one of the preceding aspects, the wearable protection device comprises at least one auxiliary covering (30) of sheet material arranged in the compartment (V) of the casing (3).

In an aspect 163duodevicies according to the preceding aspect the auxiliary covering is interposed between the second covering (5) of the casing (3) and the bladder (2).

In an aspect 163undevicies according to any one of the two preceding aspects the auxiliary covering (30) is superimposed on a preponderant part, optionally the entirety, of each segment and is placed in contact, both in the inflated condition and in the deflated condition, with the bladder (2).

In an aspect 163vicies according to any one of the three preceding aspects the auxiliary covering (30) is secured, optionally by sewing, to a part, optionally the entirety, of the peripheral engagement portion of each segment that is secured to the first covering (4).

In an aspect 163unvicies according to any one of the four preceding aspects the auxiliary covering (30) is detached from the second covering (5) of the casing (3).

In an aspect 163duovicies according to any one of the five preceding aspects the auxiliary covering (30) is secured to the casing (3) at the peripheral portion.

In an aspect 163tresvicies according to any one of the six preceding aspects the auxiliary covering (30) is configured to elastically deform during transition of the bladder from the deflated condition to the inflated condition.

In an aspect 163quattuorvicies according to any one of the seven preceding aspects the auxiliary covering (30), optionally the material of the auxiliary covering, is less elastically deformable than the bladder, optionally than the material of the bladder.

In an aspect 163quinquiesvicies according to any one of the eight preceding aspects a material of the auxiliary covering (30) has an elongation percentage greater than 100%, optionally comprised between 120 and 250%.

In an aspect 163sexiesvicies according to any one of the nine preceding aspects the auxiliary covering (30) is made of a material less rigid than a material of the casing (3), thereby having a higher capacity for elastic deformation than the casing (3).

In an aspect 163septiesvicies according to any one of the ten preceding aspects the auxiliary covering (30) is made of fabric material having a warp and a weft, wherein one of the warp and the weft, which exhibits greater elastic elongation than the other, extends parallel to a/the secondary direction (S).

In an aspect 163octiesvicies according to any one of the preceding aspects the bladder (2) includes at least one connecting section (20) that places in fluid communication two adjacent segments (2') of the plurality of side-by-side segments.

In an aspect 163noviesvicies according to the preceding aspect the connecting section (20) extends parallel to a/the secondary direction (S) transverse, optionally orthogonal, to the extension trajectory (T) of the segments (2').

In an aspect 163tricies according to any one of the two preceding aspects the connecting section (20) is inflatable.

In an aspect 163untricies according to any one of the three preceding aspects the at least one connecting section (20) is laterally delimited on opposite sides by a connecting segment (2c"') of a peripheral edge (2c) and by the peripheral portion of the casing (3), respectively.

In an aspect 163untricies according to any one of the four preceding aspects the bladder (2) includes a plurality of connecting sections (20), each of which placing in fluid communication two adjacent segments (2') of said plurality of side-by-side segments (2').

In an aspect 163duotricies according to any one of the five preceding aspects the connecting sections (20) are arranged at longitudinal ends of the segments (2') along a/the extension trajectory (T).

In an aspect 163trestricies according to any one of the six preceding aspect each connecting section (20) includes a first and a second connecting section arranged opposite to each other along a/the extension trajectory (T) to connect respective opposite longitudinal ends of two adjacent segments (2').

In a 164th aspect, a method for manufacturing the protection device (1) is provided, optionally according to any one of the preceding aspects from the 1st to the 163trestricies.

In a 165th aspect according to the preceding aspect, the method comprises the steps of:
- laying a first semi-finished product (4') of sheet material,
- preparing a/the bladder (2), having a/said plurality of segments and said/one or more peripheral engagement portions, arranged in a/the deflated condition above said first semi-finished product (4'),
- securing the bladder (2) to the first semi-finished product (4'),
- arranging a second semi-finished product (5') of sheet material above the bladder (2),
- securing said second semi-finished product (5') to the bladder (2) and to the first semi-finished product (4') in such a way that said first and second semi-finished product define a/the casing (3) in which the bladder (2) is housed.

In a 166th aspect according to the preceding aspect, the first semi-finished product, following the step of securing with the second semi-finished product, defines the first covering (4) of the casing.

In a 167th aspect according to any one of the two preceding aspects, the second semi-finished product, following the step of securing with the first semi-finished product, defines the second covering (5) of the casing.

In a 168th aspect according to any one of the three preceding aspects, the method, prior to the step of laying the second semi-finished product, comprises the steps of:
- laying an auxiliary semi-finished product (30') of sheet material above the bladder (2),
- securing said auxiliary semi-finished product (30') to at least one of the first semi-finished product (4') and the bladder (2).

In a 169th aspect according to the preceding aspect, the bladder (2) is interposed between the first semi-finished product (4') and the auxiliary semi-finished product (30').

In a 170th aspect according to any one of the two preceding aspects, the step of laying the second semi-finished product (5') above the bladder (2) involves laying directly said second semi-finished product above the auxiliary semi-finished product (30').

In a 171st aspect according to any one of the three preceding aspects, the auxiliary semi-finished product (30') is directly interposed between the bladder (2) and the second semi-finished product (5').

In a 172nd aspect according to any one of the four preceding aspects, the step of securing said second semi-finished product (5') to the bladder (2) and to the first semi-finished product (4') further involves securing said second semi-finished product (5') to the auxiliary covering (30') in such a way that said first and second semi-finished product can define a/the casing (3) defining a compartment (V) in which the bladder (2) is housed while the auxiliary semi-finished product (30') can define a/the auxiliary covering (30).

In a 173rd aspect according to any one of the eight preceding aspects, the step of securing the semi-finished products comprises a sewing step, optionally by means of automatic sewing machines such as template machines.

In a 174th aspect according to any one of the nine preceding aspects, the step of securing the bladder to the first semi-finished product (4') comprises sewing at least a part of the peripheral engagement portions of the bladder to the first covering (4'), optionally at a peripheral portion of the first semi-finished product and at zones spaced from said peripheral portion of the first semi-finished product.

In a 175th aspect according to any one of the ten preceding aspects, the auxiliary semi-finished product (30') is secured, optionally sewn to the bladder in correspondence of at least a part of the peripheral engagement portions of the bladder (2), optionally at a peripheral portion of the first semi-finished product (4') and at zones spaced from said peripheral portion of the first semi-finished product.

In a 176th aspect according to any one of the eleven preceding aspects, the second semi-finished product is secured, optionally sewn to the bladder (2) solely at a peripheral portion.

In a 177th aspect according to any one of the twelve preceding aspects, the second semi-finished product (5') is secured, optionally sewn to the first semi-finished product solely at a peripheral portion of said first and second semi-finished product.

In a 178th aspect according to any one of the thirteen preceding aspects, the first semi-finished product and the second semi-finished product when laid out on an ideal plane have respective perimetral edges that delimit respectively a first and second area, wherein the ratio between said first and second area is comprised between 0.98 and 1.02, optionally is substantially equal to 1.

In a 179th aspect according to the preceding aspect, the bladder (2) when laid out on an ideal plane has a perimetral edge that delimits a third area, wherein the ratio between said third area and the first area of the first covering is comprised between 0.98 and 1.02, optionally is substantially equal to 1.

In a 180th aspect according to any one of the two preceding aspects, the auxiliary semi-finished product (30') when laid out on an ideal plane has a perimetral edge that delimits a fourth area, wherein the ratio between said fourth area and the first area of the first covering (4') is comprised between 0.98 and 1.02, optionally is substantially equal to 1.

In a 181st aspect according to the preceding aspect, the ratio between the third area defined by the bladder and the fourth area defined by the auxiliary covering (30') is comprised between 0.98 and 1.02, optionally is substantially equal to 1.

In a 182nd aspect according to any one of the aspects from the 165th to the preceding aspect, the method, upon completion of securing the second semi-finished product (5') to the first semi-finished product (4'), and thus following the definition of the protection device, may comprise a cutting step to define the perimeter of said protection device.

In a 183rd aspect according to any one of the aspects from the 165th to the preceding aspect, the material of the first semi-finished product is the same as that of the first covering.

In a 184th aspect according to any one of the aspects from the 165th to the preceding aspect, the material of the second semi-finished product is the same as that of the second covering.

In a 185th aspect according to any one of the aspects from the 165th to the preceding aspect, the material of the auxiliary semi-finished product (30') is the same as that of the auxiliary covering.

In a 186th aspect according to any one of the aspects from the 165th to the preceding aspect, the step of preparing the bladder (2) comprises the sub-steps of:
- preparing a first sheet,
- superimposing a second sheet on the first sheet,
- joining in a fluid-tight manner the first and the second sheet at a peripheral zone to define said bladder (2).

In a 187th aspect according to the preceding aspect, the first and the second sheet have a gas-impermeable structure. In a 188th aspect according to any one of the two preceding aspects, the step of joining the first and second sheet comprises at least one of the following processes: bonding, sewing, welding.

In a 189th aspect according to any one of the three preceding aspects, the first and the second sheet are welded, optionally heat-welded, together to define the peripheral edge of the bladder.

In a 190th aspect, a use of said protection device is provided to define at least one of: an integral part of a garment wearable by a user, an integral part of an accessory for the protection of the body of a user (optionally at least one of: a back protector, a protection for the thorax, a protection for the shoulders, a protection for the neck, a protection for the head, a protection for the pelvis, a protection for the legs), a device couplable (securable or engageable in a removable manner) to a garment, a device couplable (securable or engageable in a removable manner) to a protection device for a user.

In an aspect 190bis is provided a use of a garment comprising one or more wearable protection devices (1) according to any one of the preceding aspects from the 1st to the 163trestricies.

In an aspect 190ter according to the preceding aspect said one or more wearable protection devices (1) cover at least one of: the torso, the upper limbs and the lower limbs of a user, excluding the feet.

In an aspect 190quater according to any one of the two preceding aspects the first covering (4) of the casing (3) is arranged on a user-facing side of the wearable garment and the second covering (5) is arranged on an outward-facing side of the wearable garment, such that the bladder (2) inflates in a direction away from the user toward the second covering (5).

In a 191st aspect, a garment (100) wearable by a user is provided comprising at least one protection device (1) according to any one of the preceding aspects.

In a 192nd aspect according to the preceding aspect, the garment (100) comprises at least one of: a jacket, a vest, a suit (optionally a motorcycle suit or a motorsport suit), technical sports clothing.

In a 193rd aspect according to any one of the two preceding aspects, the garment (100) comprises an outer layer and an inner layer, wherein the protection device (1) is engaged directly to the inner layer to define a part of an inner surface of the garment or engaged between the inner layer and the outer layer of the garment.

In a 194th aspect according to the preceding aspect, the second covering (5) defines at least a part of an outer surface of the garment, optionally the first covering defines at least a part of an inner surface of the garment.

In a 195th aspect according to any one of the four preceding aspects, the protection device (1) is secured to the inner layer of the garment.

In a 196th aspect according to any one of the five preceding aspects, the protection device (1) is sewn to the inner layer of a garment, optionally to the outer layer.

### BRIEF DESCRIPTION OF THE DRAWINGS

Some embodiments and some aspects of the disclosure will be described hereinbelow with reference to the accompanying drawings, provided for illustrative purposes only and therefore not limiting, in which:
- Figures 1 and 2 are schematic views of a garment comprising a protection device according to the present disclosure;
- Figures 3 and 4 are perspective views of a protection device according to the present disclosure;
- Figures 5 to 8 are detail views of the protection device illustrated in figures 3 and 4;
- Figure 9 is a schematic view of a protection device according to the present disclosure;
- Figure 10 is a side view showing the protection device of figures 3 and 4 worn by a user;
- Figure 11 is a schematic exploded view substantially showing the structure of the protection device;
- Figures 12 to 14 schematically show steps of the method for manufacturing a protection device according to the present disclosure;
- Figures 15 and 16 are two different views showing a protection device according to the present disclosure in an inflated condition of a bladder of said protection device;
- Figure 17 is a schematic sectional view showing a protection device according to the present disclosure in a deflated condition of a bladder of said protection device;
- Figure 18 is a schematic sectional view showing a protection device according to the present disclosure in an inflated condition of a bladder of said protection device.

### DEFINITIONS AND CONVENTIONS

In the present detailed description, corresponding parts illustrated in the various figures are indicated with the same numerical references. The figures may illustrate the subject matter of the disclosure by means of representations not to scale; therefore, parts and components illustrated in the figures may relate exclusively to schematic representations. By the term "sheet material" is meant a structure having two dimensions (for example the length and the width) of strongly prevailing dimensions with respect to a third dimension (the thickness). The sheet material extends in thickness between a first and a second main surface and may be single-layer or multi-layer.

For example, as will be better described hereinafter, the protection device which is the subject of the present disclosure comprises at least one bladder, which may be made of sheet material. In particular, the bladder may comprise at least one wall, optionally a first and a second wall, of sheet material, suitable for essentially defining a fluid-tight bladder. In the case in which the bladder has a first and second wall, these are coupled together substantially in a fluid-tight manner to essentially define a bladder.

The sheet material (or sheet) of the wall, optionally of the first and second wall, of the bladder may be single-layer or multi-layer. In the case of a single-layer sheet, this may essentially comprise a plastic film, in particular of material substantially impermeable to gases. In detail, the first and second wall may be of the heat-sealable type to allow the welding of said walls together; in particular, first and second wall may be engaged with each other by hot pressing, high-frequency welding or ultrasonic welding. In detail, the at least one wall, optionally the first and second wall, of the bladder may be of polyurethane, PVC, EVA, polyethylene, polypropylene, silicone rubber, rubber or similar materials. The thickness of the individual film of plastic material may be comprised between 0.05 and 0.4 mm, optionally 0.1 and 0.25 mm.

By the term "impermeable" is meant the capacity of a body or a material to prevent the passage of fluids. The wall, optionally the first and second wall, of the bladder is substantially impermeable to gas, i.e. does not allow a gas, for example air or nitrogen, to completely pass through the thickness of the sheet material.

In the present treatment, the term "breathable" indicates the permeability of a body or material to a gas, for example air.

By "actuator" is meant any device capable of causing a movement on a body, for example upon command of the control unit (receipt by the actuator of a command sent by the control unit). The actuator may comprise a gas generator, such as for example a pressure vessel.

The protection device may comprise/use at least one control unit responsible for controlling operating conditions implemented by the same. The control unit may be a single unit or be formed by a plurality of distinct control units depending on design choices and operating requirements.

By "control unit" is meant an electronic-type component, which may comprise at least one of: a digital processor (CPU), an analog-type circuit, or a combination of one or more digital processors with one or more analog-type circuits. The control unit may be "configured" or "programmed" to execute certain steps: this may be achieved in practice by any means that allows configuring or programming the control unit. For example, in the case of a control unit comprising one or more CPUs and one or more memories, one or more programs may be stored in appropriate memory banks connected to the CPU or CPUs; the program or programs contain instructions which, when executed by the CPU or CPUs, program or configure the control unit to execute the operations described in relation to the control unit. Alternatively, if the control unit is or comprises analog-type circuitry, then the circuit of the control unit may be designed to include circuitry configured, in use, to process electrical signals to execute the steps relating to the control unit.

At least part of the operation of the protection device described may be executed by a data processing unit, or control unit, technically replaceable by one or more electronic processors designed to execute a portion of software or firmware program loaded on a memory. Such software program may be written in any known type of programming language.

The data processing unit, or control unit, may be a "general purpose" type processor configured to execute one or more steps of the operating method identified in the present disclosure through the software or firmware program, or be an ASIC or dedicated processor or an FPGA, specifically programmed to execute at least part of the operations of the operating method.

The memory may be non-transitory and may be internal or external to the processor, or control unit, or data processing unit. The memory may also be physically divided into multiple portions.

By the term "elongation percentage" is meant to identify the elasticity of the material. This parameter may also be identified as elongation at break and represents the amount of deformation that a material can undergo before breaking, expressed as a percentage of the original length. In other words, this value provides an indication of the ductility of the material, i.e. its capacity to deform before breaking.

### DETAILED DESCRIPTION

### Protection Device

Reference numeral 1 refers to a wearable protection device configured to protect the body of a user from impacts, for example in the event of an accident. The protection device 1 may be employed in the sports field, where it may be inserted into or engaged with technical clothing such as jackets, vests, and suits for example for motorcycling and motorsport applications. As will be described in greater detail below, the protection device 1 may be insertable into or couplable to a garment, or may form an integral part thereof. Alternatively, the protection device 1 may be used as a standalone protection element, for example as a knee pad, a back protector or a protection for the head, neck or chest of a user.

The protection device 1 comprises a casing 3 of sheet material defining a compartment V configured to house at least one bladder 2 configured to transition from a deflated condition to an inflated condition, thereby providing protection for the user. The casing 3 is configured to assume either a relaxed or a tensioned configuration depending on the stresses applied to the material, which in turn depend on the condition of the bladder. In the deflated condition of the bladder 2, the casing assumes a non-tensioned condition, whereas in the inflated condition of the bladder, the casing 3 is in tension.

The casing 3 may be made of a fabric material permeable to gases either inherently (due to the fabric's fiber and weave structure) or by virtue of its construction. For example, a woven fabric can inherently provide breathability and a degree of deformability, allowing the fabric to flex in response to applied stresses. Alternatively or additionally, the fabric may be provided as a sheet material with a perforated structure. In an example, the casing 3 may be made of a deformable fabric, for example polyester, nylon, or cotton. The thickness of the fabric of the casing 3 may be between 0.1 and 30 mm, optionally between 0.5 and 15 mm. Gas permeability may thus be achieved by selecting a breathable fabric and/or by providing openings extending through the thickness of the fabric sheet to allow gas passage.

The casing 3 comprises a first covering 4 and a second covering 5 of sheet material, which are at least partially facing each other so as to delimit the compartment V therebetween. The first and second covering 4, 5 may have respective peripheral portions 3c (herein also referred to as a "perimeter" of the casing) secured together, for example by sewing, to define a partially or entirely closed envelope. In the accompanying figures, a configuration is illustrated in which the first and second covering 4, 5 are engaged with each other along the entire peripheral portion to define a single completely closed compartment V housing the bladder 2.

The type of engagement between the first and second covering may depend on the material employed for the casing. For example, when a woven material is used, the first and second covering may be secured by sewing. Alternatively, the coverings 4, 5 may be joined by means of adhesive or by a heat-sealing process. The casing 3 may include solely the first and second covering 4, 5 joined at their peripheral portions 3c.

The first and second covering 4, 5 may be in contact with each other at the peripheral portion, while for a preponderant part of their surface extension (optionally at least 95% thereof), the first and second covering 4, 5 are spaced apart from each other, optionally by interposition of the bladder 2.

The material of the casing 3, and in particular of the first and second covering 4, 5, may be a semi-rigid material having limited elasticity. For example, the first and second covering 4, 5 of the casing have an elongation percentage of less than 100%, optionally less than 50%. The material of the casing 3, and in particular of the first and second covering, may have an elastic modulus greater than 150 MPa, optionally greater than 200 MPa. For example, the first covering 4 may be made of perforated woven fabric, such as polyester, and have an elastic modulus greater than 1500 MPa. The second covering 5 may also be made of woven material, such as nylon, and have an elastic modulus comprised between 1500 MPa and 3500 MPa. The second covering 5 may nevertheless be perforated, for example to promote air passage.

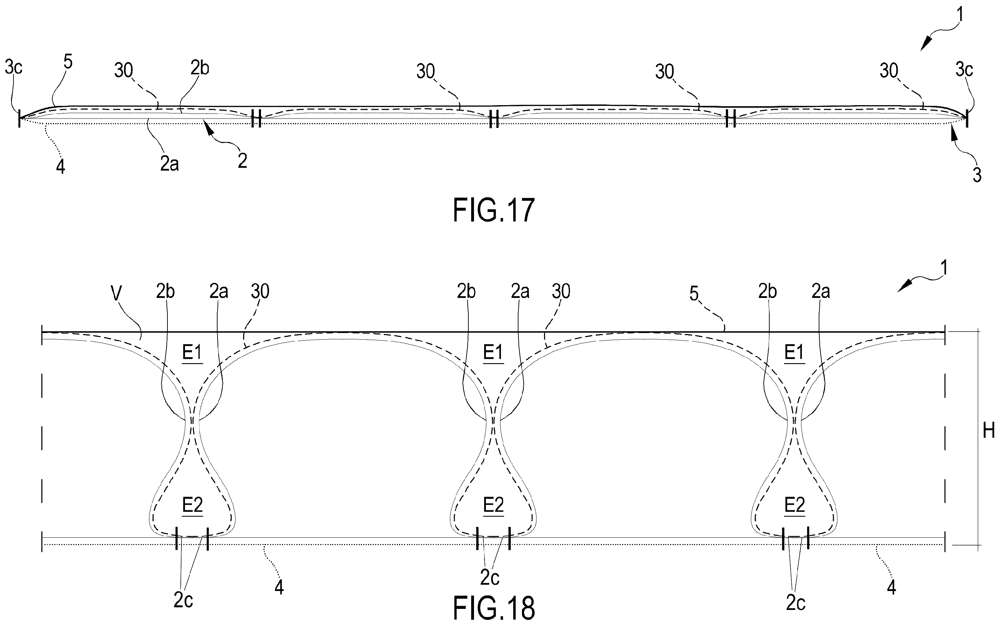

During the transition of the bladder 2 from the deflated condition to the inflated condition, the casing is configured to vary its thickness (as for example shown in Figure 18). The first and second covering 4, 5 are spaced apart by a maximum distance that defines the thickness or height of the casing, both in the deflated condition and in the inflated condition of the bladder 2.

In the deflated condition of the bladder 2, the height (or thickness) of the casing 3 may be less than 3 cm, optionally comprised between 0.1 and 2 cm. In the inflated condition of the bladder 2, the first and second covering are spaced apart by a maximum distance that defines a height H of the casing 3. As shown in Figure 18, the height (or thickness) of the casing 3 in the inflated condition may be greater than the height (or thickness) of the same casing 3 in the deflated condition (Figure 17). In particular, the ratio between the height of the casing 3 in the inflated condition and the height of the casing 3 in the deflated condition is equal to or greater than 5, optionally comprised between 6 and 20. The height (or thickness) H of the casing 3 in the inflated condition of the bladder 2 is greater than 3 cm, optionally comprised between 4 cm and 20 cm.

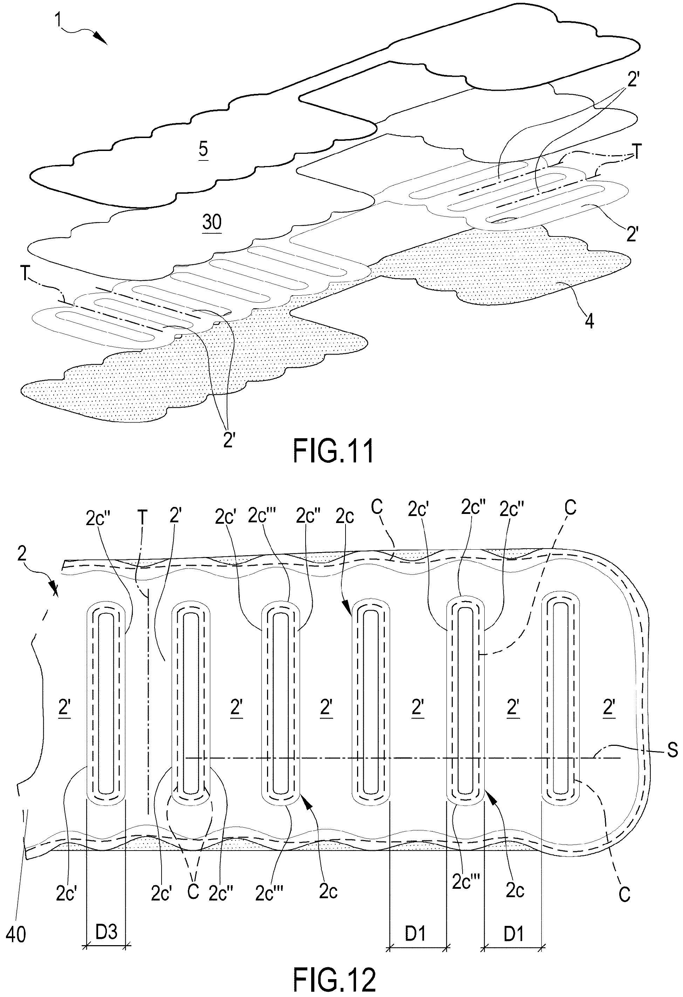

The protection device 1 further comprises at least one bladder 2 comprising a plurality of inflatable chambers arranged side-by-side, hereinafter also referred to as segments 2'. Each segment 2' has an elongated conformation extending along a respective extension trajectory T (see Figure 12). At least in the inflated condition, the extension trajectories of two adjacent segments may be either inclined relative to each other at an angle of less than 30°, optionally less than 20°, or substantially parallel to each other. Two side-by-side segments may have substantially the same length, measured along the respective extension trajectories. For example, each segment may have a length measured along the extension trajectory greater than 50 mm, optionally comprised between 100 mm and 300 mm. The bladder 2 may be entirely housed in the compartment V of the casing, interposed between the first and second covering 4, 5.

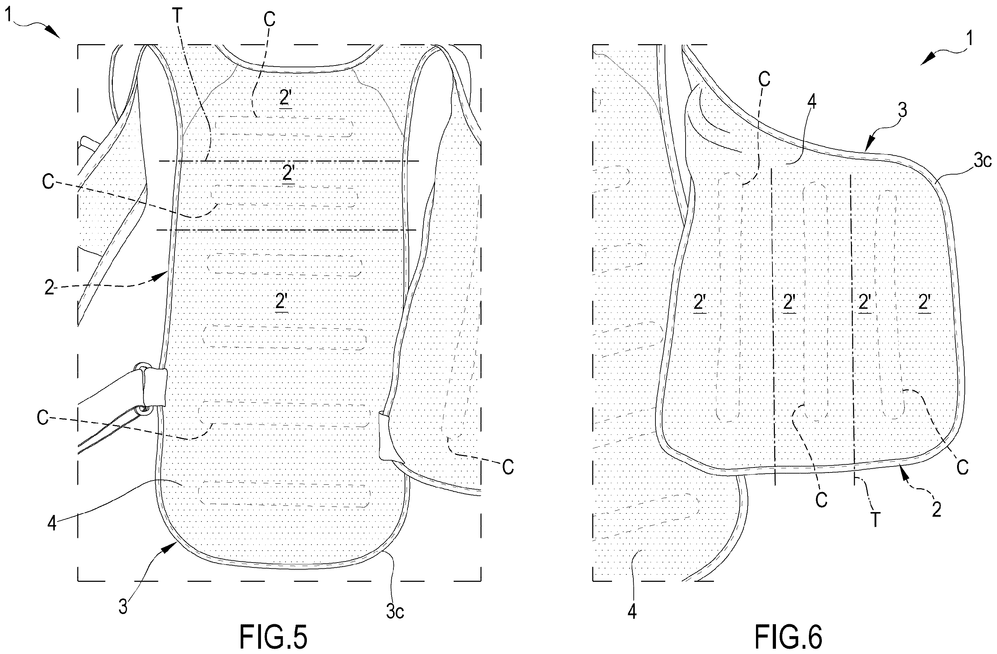

The bladder 2 may comprise two or more segments 2' arranged side-by-side with one another to define a series of segments. Alternatively, as shown in Figures 5, 6, and 9, the bladder 2 may comprise at least a first series of segments comprising two or more side-by-side segments and/or at least a second series of segments comprising two or more side-by-side segments having a different orientation with respect to the first series of segments. In an example, the first series of segments extends transversely with respect to the second series of segments.

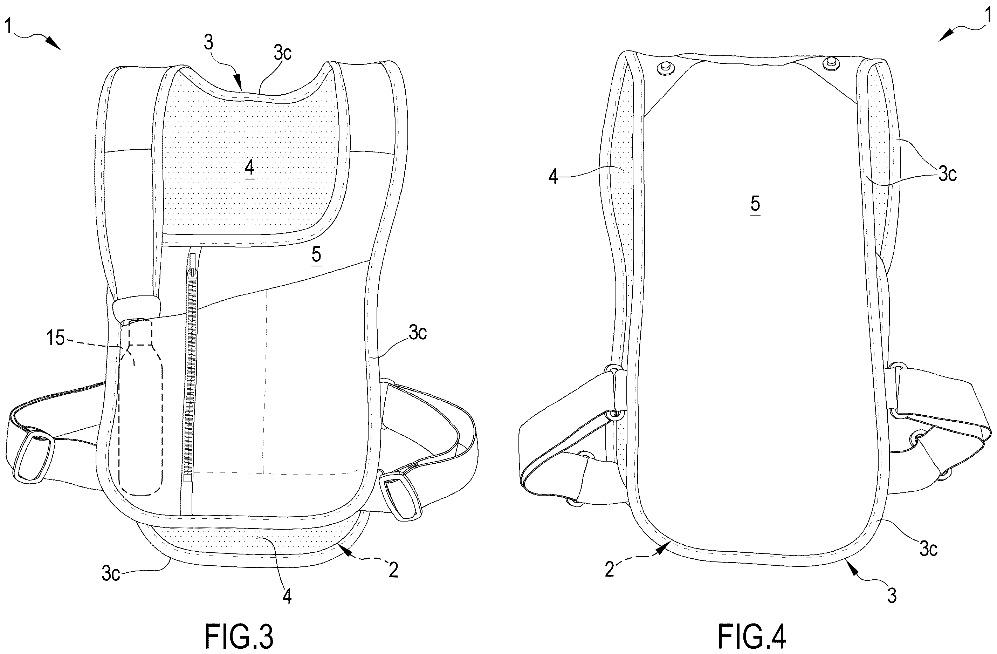

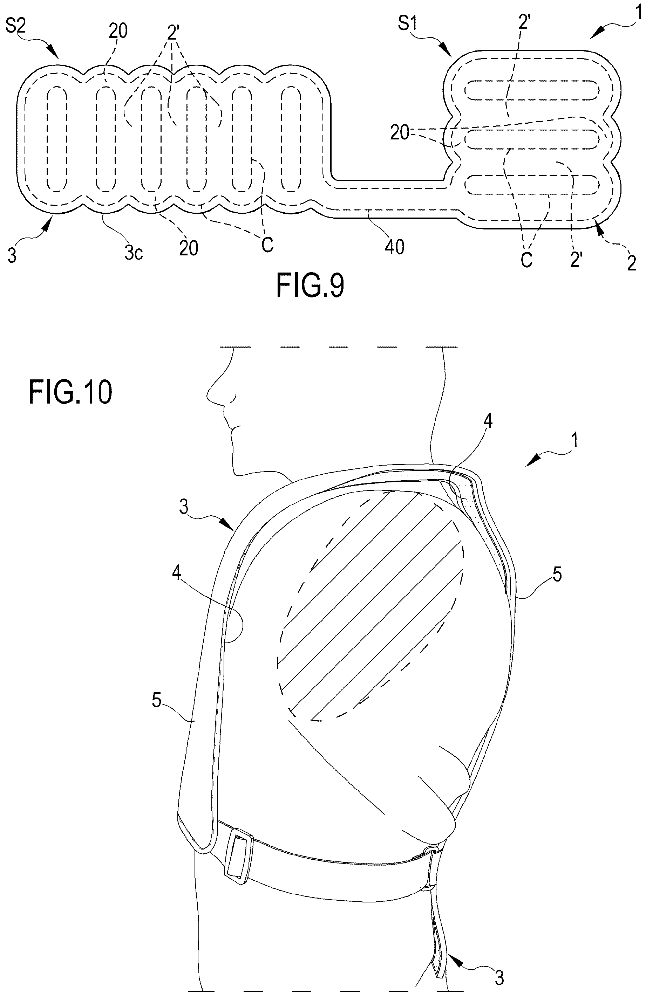

Figures 5, 6, and 9 illustrate a bladder 2 having two series of segments: a first series configured to provide protection for the back of a user (Figure 4), and a second series configured to protect the thorax. The second series is placed in fluid communication with the first series via a manifold 40 (Figure 9), which is a further inflatable section of the bladder 2

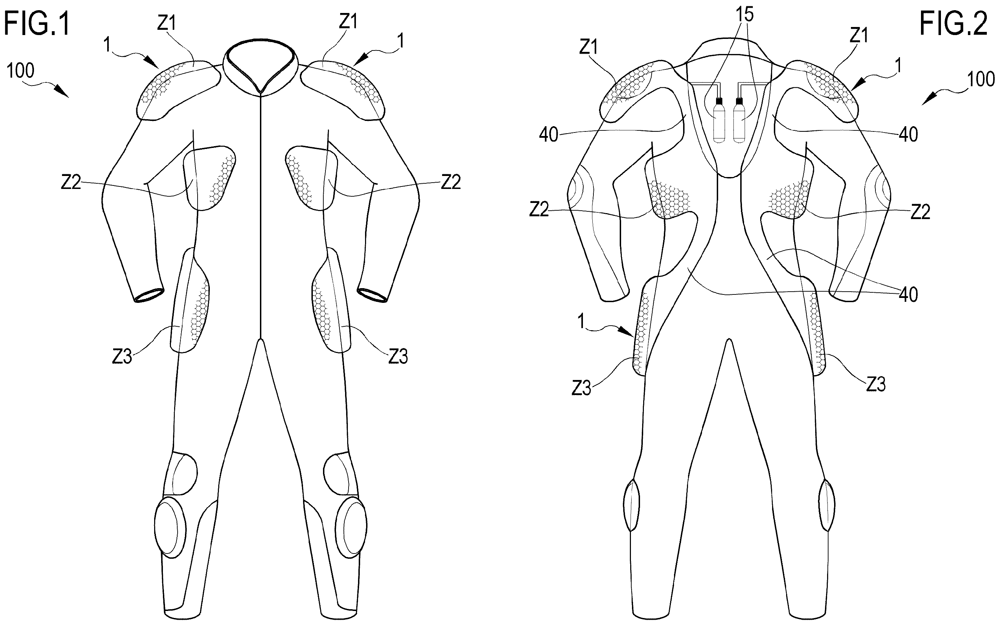

Figures 1 and 2 illustrate, in a non-limiting manner, a protection device 1 having three series of segments configured to protect zones Z1, Z2, and Z3 of a user, as schematically shown on garment 100. In this configuration, two manifolds 40 are configured to place in fluid communication the various series of segments.

The segments 2' are arranged side-by-side but spaced apart from one another, at least in the deflated condition.

Each segment 2' of the bladder 2 may comprise at least one wall of sheet material delimiting an internal volume. The at least one wall has a first portion and a second portion facing each other. In an example, the at least one wall of each segment comprises a first wall 2a and a second wall 2b of sheet material. The first wall 2a and the second wall 2b may also be referred to as two "overlapping layers" of the bladder. The first wall 2a has a central zone which defines the first portion of the at least one wall, while the second wall 2b has a central zone which defines the second portion of the at least one wall.

As mentioned before, the bladder 2 may be configurable between:
- a deflated condition (see, for example, Figure 17), in which the first and second portion of the at least one wall of each segment (i.e. the overlapping layers of the bladder), for a preponderant part of their surface extension, are close together and at least partly in contact with each other; and
- an inflated condition (see, for example, Figure 18), in which the first and second portion of the at least one wall of each segment (i.e. the overlapping layers of the bladder), for a preponderant part of their surface extension, are spaced apart, wherein the at least one wall, in the inflated condition, defines an internal volume greater than the internal volume defined by the same wall in the deflated condition.

When viewed in cross-section along a plane orthogonal to the extension trajectory of a respective segment and at the peripheral engagement portion, the at least one wall of each segment defines a substantially closed perimetral profile having a predetermined length. In the deflated condition, the length of the closed perimetral profile is comprised between 100 mm and 600 mm, optionally between 110 mm and 170 mm. In the inflated condition, the length of the closed perimetral profile is comprised between 100 mm and 1200 mm, optionally between 150 mm and 350 mm.

The length of a segment measured along its extension trajectory is greater than the length of the closed perimetral profile of the same segment. In particular, in the deflated condition, the ratio between the length of a segment measured along the extension trajectory and the length of the closed perimetral profile of the same segment is greater than 1.1, optionally comprised between 1.2 and 3.5.

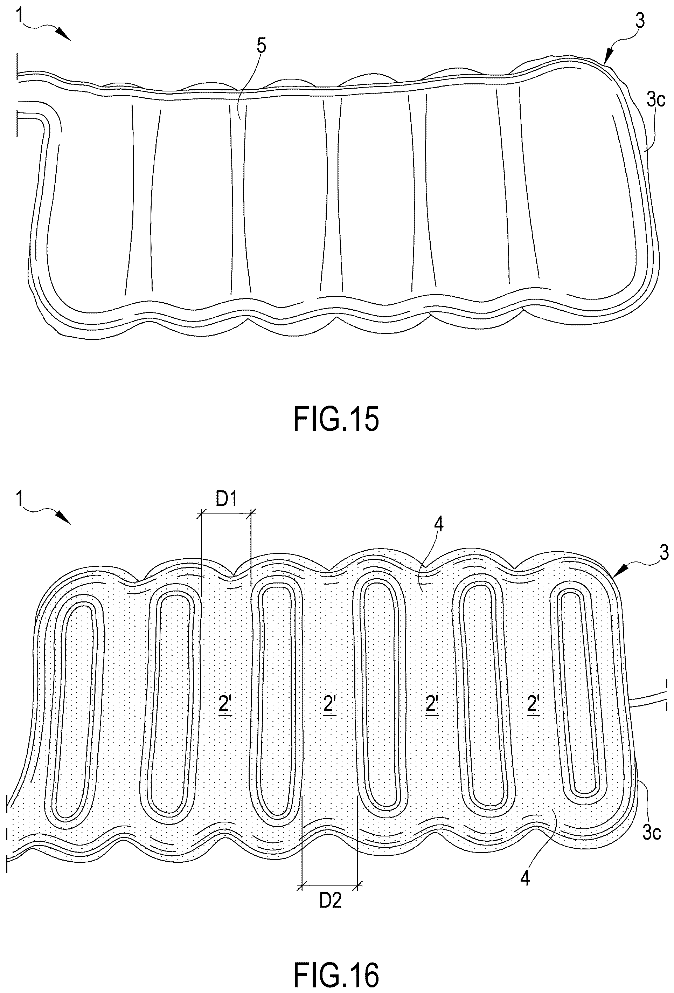

In the inflated condition, the segments have substantially parallel extension trajectories T (see Figures 15 and 16, which show the protection device 1 from the side of the first covering 4 and the second covering 5 respectively, with the segments 2' within the casing 3 schematically represented). In both the inflated condition and the deflated condition, the first and second covering 4, 5 are maintained at a distance from each other, for a preponderant part of their surface extension (for example at least 70%, optionally at least 80%, of the surface extension of the coverings 4, 5), by interposition of the plurality of segments 2'.

In Figure 17 the wall portions are represented as substantially separated in the deflated condition. However, in the deflated condition, the wall portions (i.e. the overlapping layers) are actually in contact with each other, including at a central zone thereof.

The bladder 2 further comprises one or more peripheral engagement portions (also referred to herein as "securing areas" of the bladder), which are interposed between adjacent segments 2' and are secured to, or in proximity to, at least one of the first and second covering 4, 5, for example by sewing. Each segment 2' is delimited on opposite sides by respective peripheral engagement portions of the bladder 2. A peripheral engagement portion is interposed between a first segment and an adjacent second segment and faces both segments, such that the segments 2' are positioned side-by-side with the bladder's peripheral engagement portion directly separating them. Figure 12 schematically illustrates a plurality of adjacent segments 2'.

The one or more peripheral engagement portions (or securing areas) include respective peripheral edges 2c, which are defined where the two overlapping layers of the bladder, namely the first wall 2a and the second wall 2b, are engaged with each other. Each peripheral engagement portion thus forms a respective peripheral edge 2c defining a fluid-tight joining band between the overlapping layers 2a, 2b, configured to be stably engaged with the casing 3. Depending on the sheet material of the overlapping layers, they may be joined together to define the peripheral edge 2c by means of adhesive, welding, or sewing. In a non-limiting embodiment, the first and second wall 2a, 2b of the bladder 2 are joined by means of hot pressing, high-frequency welding, or ultrasonic welding.

At least one of the peripheral engagement portions (or securing areas) of the bladder 2 is secured to the first covering 4 at a zone spaced from the peripheral portion (or perimeter) of the casing 3 (see for example the seams C schematized in Figure 5). The one or more peripheral engagement portions thereby fix the bladder 2 to the first covering 4 at a zone spaced from the peripheral portion of the casing, defining the plurality of segments 2' (or inflatable chambers) between adjacent peripheral engagement portions. The bladder 2 is non-removably secured to the first covering 4 of the casing 3 via said one or more peripheral engagement portions and optionally it is further non-removably secured to the casing 3 at the peripheral portion.

The peripheral engagement portions of the bladder 2 that are interposed between two side-by-side segments 2' are secured, optionally by sewing, to the first covering 4, and optionally solely to the first covering 4 of the casing 3. In particular, said peripheral engagement portions are secured, optionally by sewing, solely to the first covering 4 at a zone spaced from the peripheral portion of the casing 3. The peripheral engagement portions of the bladder 2 that are secured to the first covering 4 at a zone spaced from the peripheral portion of the casing 3 are not secured to the second covering 5. In other words, the bladder 2, at said one or more peripheral engagement portions, is solely secured, optionally by sewing, to the first covering 4 of the casing 3, while remaining detached from the second covering 5 of the casing 3.

As shown in Figure 12, each peripheral edge 2c of a respective one of the one or more peripheral engagement portions (or securing areas) has a first and a second section 2c', 2c" arranged opposite one another and facing each other. In an example, the first section 2c' may be joined to the second section 2c" at end portions by one or more connecting segments 2c"'. The first and second sections 2c', 2c" extend substantially along the extension trajectory T of the respective segment 2', while each connecting segment 2c'" defines a connecting portion between the two sections and extends transversely to the extension trajectory T.

The one or more connecting segments 2c"' join the first section 2c' to the second section 2c" at respective end portions, thereby forming a closed loop, optionally circular or annular. The bladder 2 may include one or more non-inflating chambers, each of which being perimetrally delimited by a respective peripheral edge 2c. Each non-inflating chamber may comprise one or more through openings within the closed loop of the respective peripheral edge 2c, configured to allow the passage of air through the bladder 2. Such through openings promote breathability of a garment in which the protection device 1 may be installed, enabling air circulation through the protection device 1.

Each peripheral edge 2c has an elongated shape extending along an extension trajectory T, optionally rectilinear. The bladder includes a plurality of peripheral engagement portions (or securing areas) having respective peripheral edges 2c spaced apart from one another along a secondary direction S transverse, optionally orthogonal, to the extension trajectory T. Each peripheral edge 2c separates two adjacent segments 2' (or inflatable chambers) of the bladder 2. A width of each segment 2' (or inflatable chamber) is defined as a minimum distance between two adjacent peripheral edges 2c along the secondary direction S, for example as indicated by D1 in Figure 12, or by D2 in Figure 16.

In a first embodiment, the width of each segment 2' is greater than the minimum distance, identified with D3 in Figure 12, between the first section 2c' and the second section 2c" of the peripheral edges 2c. In this configuration, the segments constitute the predominant inflatable area of the bladder 2, providing a greater inflatable volume and thus enhanced shock absorption capacity.

In a second embodiment, the width of each segment 2' is less than the minimum distance between the first section 2c' and the second section 2c" of the peripheral edges 2c. In this configuration, the peripheral engagement portions occupy a predominant portion of the bladder 2, resulting in a stiffer overall structure with a reduced inflatable volume that provides a more rigid and localized impact response.

In a third embodiment, the bladder 2 comprises both segments having a width greater than the minimum distance between the first and second section 2c', 2c" of the peripheral edges 2c and segments having a width less than said minimum distance. This mixed configuration generates areas of differentiated inflation across the bladder 2, allowing the protection device 1 to be tailored to the specific protection requirements of different body regions. For example, wider segments may be arranged in zones requiring higher impact absorption, such as the spine or thorax, while narrower segments may be arranged in zones where improved flexibility and conformability to body curvatures are preferred.

In general, when the bladder 2 is in the deflated condition, the width of each segment 2' (or inflatable chamber), defined as the minimum distance between two adjacent peripheral edges 2c along the secondary direction S, may be a predetermined distance D1 (Figure 12), for example equal to or greater than 10 mm, optionally comprised between 30 mm and 100 mm. In an example, the width of each segment 2' (or inflatable chamber), in the inflated condition of said segments, may be a predetermined distance D2 (Figure 16), for example equal to or greater than 10 mm, optionally comprised between 30 mm and 100 mm. The predetermined distance D1 present as the width of the segment 2' when the bladder is in the deflated condition may be substantially equal to the predetermined distance D2 as the width of the same segment 2' when the bladder is in the inflated condition.

A preponderant part of the peripheral edge 2c may be configured not to vary its position with respect to the first covering 4 of the casing 3, during the transition of the bladder 2 from the deflated condition to the inflated condition. In an example, the portion of peripheral edge 2c secured, optionally by sewing, to the first covering 4 at a zone spaced from the peripheral portion of the casing 3 is configured to vary its distance solely with respect to the second covering 5 during the transition from the deflated condition to the inflated condition of the bladder. The portion of peripheral edge 2c secured to the first covering 4 at a zone spaced from the peripheral portion of the casing 3 is configured to remain in contact with said first covering 4 during the transition of the bladder 2 from the deflated condition to the inflated condition.

When viewed in cross-section along a plane orthogonal to the extension trajectory of the respective segment and at the peripheral engagement portion, the at least one wall of each segment (optionally the first and second wall 2a, 2b) defines a substantially closed perimetral profile having a predetermined length (or extension) comprised between 45 mm and 345 mm, optionally between 70 mm and 300 mm. The length of a segment 2' measured along the extension trajectory T may be equal to or greater than the length of the perimetral profile of the same segment 2'. In particular, the ratio between the length of a segment measured along the extension trajectory and the length of the closed perimetral profile of the same segment may be equal to or greater than 1, optionally comprised between 1 and 1.5.

In a non-limiting manner, the ratio between the length of the perimetral profile of each segment 2' in the inflated condition and the length of the same perimetral profile in the deflated condition is equal to or greater than 1, optionally comprised between 1 and 1.4 inclusive. Elastic deformation of the bladder may be achieved, for example, by employing a single-layer plastic film, such as polyurethane.

The engagement between each peripheral engagement portion and the casing 3 ensures correct positioning of the bladder 2 and, consequently, its ability to deform within the casing 3. Each peripheral engagement portion (or the peripheral edge) is secured solely to the first covering 4, optionally at a region spaced from the peripheral portion of the casing 3 (see, for example, seams C in Figures 5 and 6).

At least a part of at least one of said first and second section 2c', 2c" facing each other are secured, optionally by sewing, to the first covering 4. In particular, a preponderant part of the first section 2c' and a preponderant part of the second section 2c" is secured to the first covering 4, optionally solely to the first covering 4 at a zone spaced from the peripheral portion of the casing 3. In the attached figures, a non-limiting configuration has been illustrated in which the entire first section 2c' and the entire second section 2c" is secured to the first covering 4, optionally solely to the first covering 4 at a zone spaced from the peripheral portion of the casing 3, for example by seam C. The first and second section 2c', 2c" of the peripheral edge extend substantially along the extension trajectory of the respective segment, optionally rectilinear. Each segment is therefore secured to, or in proximity to, the first covering 4 at a single continuous portion of the peripheral edge 2c, or one or more spaced portions of the peripheral edge.

The bladder 2 further comprises at least one connecting section 20 (also referred to as a "passage"), which constitutes an inflatable portion of the bladder 2 that places two or more adjacent segments 2' in fluid communication. The connecting section 20 is also housed in the compartment V of the casing 3. As shown for example in the accompanying figures, the bladder 2 may comprise a first connecting section and a second connecting section (also referred to as "first and second passages") disposed on opposite sides of the plurality of segments with respect to the extension trajectory T, thereby defining a ladder-like shape as shown in Figures 9 and 12.

Each connecting section 20 extends parallel to the secondary direction S transverse, optionally orthogonal, to the extension trajectory T of the segments 2' and places in fluid communication two adjacent segments 2' of the plurality of side-by-side segments. The at least one connecting section 20 may be laterally delimited on opposite sides by a connecting segment 2c"' of a peripheral edge 2c and by the peripheral portion (or perimeter) of the casing 3, respectively.

The bladder 2 may include a plurality of connecting sections 20 (or passages), each of which placing in fluid communication two adjacent segments 2'. The connecting sections 20 are arranged at the longitudinal ends of the segments 2' along the extension trajectory T. In particular, each pair of adjacent segments 2' may be connected by a first and a second connecting section arranged opposite to each other along the extension trajectory T at respective opposite longitudinal ends of said two adjacent segments 2'.

Each connecting section 20 comprises at least one wall of sheet material delimiting an internal volume that is in fluid communication with the internal volume of the adjacent segments 2'. The connecting section 20 comprises a first portion and a second portion facing each other, joined by one or more peripheral engagement portions. Being part of the bladder, the connecting section 20 is configurable between:
- a deflated condition, in which the first and second portion of the at least one wall of the connecting section, for a preponderant part of their surface extension, are close together and at least partly in contact with each other; and
- an inflated condition, in which the first and second portion of the at least one wall of the connecting section, for a preponderant part of their surface extension, are spaced apart, wherein the at least one wall defines an internal volume greater than the internal volume defined by the same wall in the deflated condition.

As schematically shown in Figure 11, the bladder 2 is at least partly counter-shaped to an internal surface delimiting the compartment of the casing 3. In the deflated condition, the bladder 2 is configured to occupy substantially the entire compartment V of the casing 3. In the inflated condition, the bladder 2 is configured to occupy a preponderant part of said internal volume. More specifically, in the inflated condition, the bladder 2 occupies a predetermined volume, wherein the ratio between the internal volume defined by the casing and the predetermined volume occupied by the bladder is less than 1, optionally comprised between 0.8 and 0.97, and more optionally between 0.9 and 0.96.

Figure 17 shows a schematic cross-sectional view along a plane orthogonal to the extension trajectory T of the segments 2', illustrating the position of the bladder 2 with respect to the casing 3 and the manner in which they are secured to each other. As shown, the first wall 2a of each segment 2' directly faces and is in contact with the first covering 4, while the second wall 2b directly faces and/or is in contact with the second covering 5. The first and second wall of each segment are respectively in contact with the first and second covering 4, 5, both in the inflated condition and in the deflated condition.

The first walls 2a of the plurality of segments, both in the inflated condition and in the deflated condition, are spaced from each other and in direct contact with the casing 3, optionally with the first covering 4. As shown in Figure 18, in the inflated condition, a part of the second wall 2b of a segment is at least partly facing a part of the second wall 2b of an adjacent segment 2'.

In the deflated condition, the first and second covering 4, 5 of the casing 3 lie on respective surfaces that are at least partly and substantially parallel to each other. Similarly, in the deflated condition, the first covering 4 lies on a surface that is at least partly and substantially parallel to a lying surface of the bladder 2.

The bladder 2 is made of deformable sheet material, for example at least in part of one or more of the following materials: polyurethane, PVC, EVA, polyethylene, polypropylene, silicone rubber, or rubber. The bladder 2 is elastically deformable during the transition from the deflated condition to the inflated condition. For example, the material of the bladder 2 has an elongation percentage greater than that of the casing material, optionally greater than 100%, more optionally greater than 300%. The material of the bladder 2 may have an elastic modulus of less than 70 MPa, optionally less than 60 MPa, and more optionally comprised between 10 MPa and 50 MPa. In other words, the casing 3, and optionally the first covering 4, is more rigid than the bladder 2, thereby having a lower capacity for elastic deformation than the bladder 2.

The bladder 2 has a gas-impermeable structure that enables its transition from the deflated condition, in which the bladder is in a relaxed state, to the inflated condition, in which the material of the bladder 2 is substantially stretched and under tension. The material of the bladder 2 may be, for example, a single-layer plastic film that is gas-impermeable and deformable

The protection device 1 may comprise at least one auxiliary covering 30 of sheet material arranged in the compartment V of the casing 3. The auxiliary covering 30 is interposed between the second covering 5 of the casing 3 and the bladder 2.

The auxiliary covering 30 is made of sheet material, for example of a material different from that of the first and second covering 4, 5. The auxiliary covering 30 may be directly secured to at least one of: the bladder 2 (optionally directly to a peripheral engagement portion), or the first covering 4.

The auxiliary covering 30 is configured to limit the expansion of one or more segments during the transition of the bladder 2 from the deflated condition to the inflated condition, for example to prevent bursting.

The auxiliary covering 30 is superimposed on at least one segment, and in particular on the plurality of segments. As visible from the attached figures, the auxiliary covering 30 may be interposed between the bladder 2 and the second covering 5, superimposed on a preponderant part, optionally the entirety, of each segment and optionally on a preponderant part of each connecting section 20. The auxiliary covering 30 is placed in contact, both in the inflated condition and in the deflated condition, with the bladder 2. The auxiliary covering 30 may be in contact with the second wall 2b of each segment, as well as with the second covering 5 of the casing, both in the inflated condition and in the deflated condition (Figures 17 and 18). In the deflated condition, the bladder 2 lies on a surface that is at least partly and substantially parallel to a lying surface of the auxiliary covering 30.

When laid out on a plane in the deflated condition, the auxiliary covering 30 has an external profile that delimits a predetermined surface extension. Similarly, when laid out on a plane in the deflated condition, the bladder 2 has an external profile that delimits a predetermined surface extension. The ratio between the area of the predetermined surface extension of the bladder 2 and the area of the surface extension of the auxiliary covering 30 is comprised between 0.8 and 1.2, optionally between 0.9 and 1.1, and more optionally between 0.98 and 1.02. In other words, the auxiliary covering 30 substantially covers the entire bladder.

The first covering 4 of the casing 3 is also made of sheet material and, when laid out on a plane in the deflated condition, has an external profile that delimits a predetermined surface extension. The ratio between the area of the predetermined surface extension of the bladder 2 and the area of the surface extension of the first covering 4 is comprised between 0.8 and 1.2, optionally between 0.9 and 1.1, and more optionally between 0.98 and 1.05. Similarly, the second covering 5 of the casing 3, when laid out on a plane in the deflated condition, has an external profile that delimits a predetermined surface extension. The ratio between the area of the predetermined surface extension of the bladder 2 and the area of the surface extension of the second covering 5 is comprised between 0.8 and 1.2, optionally between 0.9 and 1.1, and more optionally between 0.98 and 1.05. Accordingly, the ratio between the area of the surface extension of the first covering 4 and the area of the surface extension of the second covering 5 is comprised between 0.8 and 1.2, optionally between 0.9 and 1.1, and more optionally between 0.98 and 1.05.

The first covering, second covering, auxiliary covering, and bladder 2 have substantially the same surface extension. These components also have substantially the same shape (see Figure 11), such that they are completely superimposable and can be secured together, for example by sewing, at a common peripheral portion.

The auxiliary covering 30 is secured, optionally by sewing, to a part, optionally the entirety, of the peripheral engagement portion of the bladder 2 that is secured to the first covering 4 while remaining detached from the second covering 5 of the casing 3. In an example, the auxiliary covering 30 is secured to a preponderant part of, or optionally to the entire, peripheral edge 2c. The auxiliary covering 30 is secured, optionally by sewing, both to the peripheral edge 2c and to the first covering 4. Similarly to the bladder, the auxiliary covering 30 is secured, optionally by sewing, to the first covering 4 both at the peripheral portion of the casing 3 and at zones of the first covering 4 spaced from the peripheral portion of the casing 3. The auxiliary covering 30 is secured to the second covering 5 solely at the peripheral portion.

As shown for example in Figures 17 and 18, the auxiliary covering 30 is in direct contact solely with the second wall 2b of each segment, both in the inflated condition and in the deflated condition. During the transition of the bladder 2 from the deflated condition to the inflated condition, the auxiliary covering 30 is configured to allow substantially uniform deformation of all the segments 2'.

The auxiliary covering 30 is configured to elastically deform during the transition of the bladder from the deflated condition to the inflated condition. The auxiliary covering 30 is made of elastically deformable material, although different from the material of the bladder 2. The auxiliary covering 30, optionally the material thereof, is less elastically deformable than the bladder 2. The material of the auxiliary covering 30 has an elongation percentage lower than that of the bladder, for example greater than 100%, optionally comprised between 120% and 250%. The material of the auxiliary covering 30 has an elongation percentage greater than that of the material of the casing 3.

The material of the auxiliary covering 30 has an elastic modulus greater than that of the material of the bladder 2, but lower than that of the material of the casing 3. In other words, the auxiliary covering 30 is made of a material less rigid than the material of the casing 3, thereby having a higher capacity for elastic deformation than the casing 3, while being made of a material more rigid than the material of the bladder 2.

The material of the auxiliary covering 30 may be selected from nylon, polyester, polypropylene, cotton, or polyurethane. The auxiliary covering 30 may be made of fabric material having a warp and a weft. One of the warp and the weft, which exhibits greater elastic elongation than the other, extends parallel to the secondary direction S transverse, optionally orthogonal, to the extension trajectory T of the segments 2' (or inflatable chambers).

The auxiliary covering 30 serves as a cover for the bladder 2 and defines an additional interposition element between the first and second covering 4, 5. The layered structure of the protection device 1 is shown in Figures 17 and 18.

As visible in Figure 18, the configuration of the casing 3 and the bladder 2 generates, in the inflated condition, one or more void zones. In the inflated condition, the bladder 2 is configured to occupy a predetermined volume smaller than the internal volume of the compartment V defined by the casing 3. For example, the ratio between the internal volume of the compartment V and the predetermined volume defined by the bladder 2 in the inflated condition may be equal to or greater than 1.1, optionally comprised between 1.2 and 1.5.

The structure of the bladder 2 and the manner in which it is secured to the casing 3 allow at least one void zone to be defined between two immediately adjacent segments of the bladder, in cooperation with at least the second covering 5, in the inflated condition and according to a section orthogonal to the extension trajectory of at least one of said segments. The void zone may be present for a preponderant part of the overall longitudinal extension of said segments, optionally at least 80%, and more optionally 90%. In particular, such void zone is present at least in the portions where the segments are secured to the casing 3.

The void zone has a predetermined area. The ratio between the predetermined area and the area of one of the segments delimiting said void zone, in the inflated condition, in section along a plane orthogonal to the extension trajectory of the respective segment, at a longitudinal mid-zone of said segment, is comprised between 0.05 and 0.3, optionally between 0.06 and 0.1.

The void zone is directly defined by a part of the auxiliary covering 30 that covers the plurality of segments and by the second covering 5, and constitutes a first void zone E1 of the protection device 1. The bladder 2 (or more precisely, the bladder covered by the auxiliary covering 30), in the inflated condition, also defines a further void zone. This further void zone is defined by a part of a first wall 2a of a first segment, a part of the second wall 2b of a second segment immediately adjacent to the first, and the facing peripheral engagement portions of said first and second segment, thereby defining a second void zone E2.

As visible, for example, in Figure 18, the at least one void zone comprises:
- a first void zone E1 delimited between a first segment and a second segment of the bladder 2 that are immediately adjacent, and the second covering 5; and
- a second void zone E2 defined by a part of a first wall 2a of a first segment, a part of the second wall 2b of a second segment immediately adjacent to the first, and the facing peripheral engagement portions of said first and second segment.

Each of the first and second void zones E1, E2 has, in section, a substantially triangular shape. The first and second void zones defined by the same pair of immediately adjacent first and second segments together delimit a total void zone having a predetermined area. This predetermined area of the total void zone is smaller than the area delimited by the first or second segment in the inflated condition. The ratio between the area defined by the first or second segment and the predetermined area defined by the total void zone is comprised between 1.1 and 6, optionally between 2 and 4.

The void zones are opposite one another and define a bridge-like connection between two segments. This configuration allows the first and second covering 4, 5 to become tensioned, thereby defining an auxiliary protection zone for the user. Furthermore, this structure allows the first and second covering 4, 5, at least between the peripheral edges 2c of two immediately adjacent segments, to define a substantially flat surface. This maximizes the width extension of the protection device, providing maximum protection to the user.

The protection device 1 may further comprise at least one actuator 15 configured to be placed in fluid communication with the bladder 2 to enable the transition thereof from the deflated condition to the inflated condition. The actuator 15 may comprise a pressure vessel. The protection device 1 may further comprise:
- an activator comprising, for example, a pyrotechnic charge and/or a perforator, configured to activate the actuator 15 to enable the transition of the bladder from the deflated condition to the inflated condition; and
- a control unit connected to the activator, wherein the control unit is configured to send a command signal to the activator for activation (for example, opening) of the actuator 15.

The protection device 1 may further comprise at least one sensor configured to emit a signal representative of a condition of the user. The control unit is configured to:
- receive the signal from the sensor;
- compare the received signal with at least one threshold value of a control parameter;
- determine, based on the comparison, the presence of an accident condition for the user; and,
- if such an accident condition is determined, send the command signal to the activator to cause the bladder 2 to assume the inflated condition.

The at least one sensor may comprise at least one of: a gyroscope, an accelerometer, or a GPS.

### Manufacturing Method

The present disclosure also relates to a method for manufacturing the protection device 1. The method comprises a step of preparing the bladder 2 having the one or more peripheral engagement portions (or securing areas), arranged in the deflated condition. The step of preparing the bladder 2 comprises the sub-steps of:
- preparing a first sheet,
- superimposing a second sheet on the first sheet,
- joining in a fluid-tight manner the first and the second sheet at a peripheral zone to define the bladder 2.

The first and the second sheet may be parts joined together in one piece and therefore define a single semi-finished product, or be two distinct elements. The first and second sheet have substantially the same shape and size in such a way that when superimposed one above the other the perimetral edge of the first sheet substantially coincides with the perimetral edge of the second sheet. The first and second sheet have a gas-impermeable structure. In an example, the first and the second sheet are made at least in part of at least one of the following materials: polyurethane, PVC, EVA, polyethylene, polypropylene. The step of joining the first and second sheet may comprise at least one of the following processes: bonding, sewing, welding. In particular, the welding sub-step may comprise at least one of the following processes: hot pressing, high-frequency welding, ultrasonic welding. The joining of the first and second sheet defines the entire bladder, comprising at least the plurality of segments each of which comprises the first and the second wall 2a, 2b joined together at the peripheral edge 2c. Depending on the shape of the first and second sheet, following the superimposition and joining steps, said first and second sheet may further define one or more connecting sections 20 (or passages).

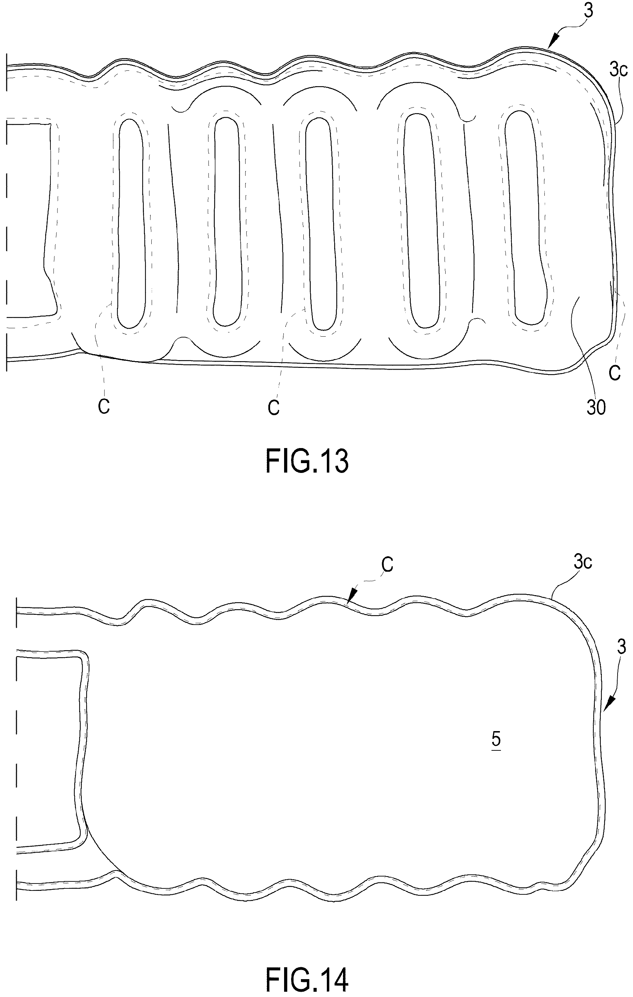

The method further comprises the steps of:
- laying a first semi-finished product of sheet material,
- preparing the bladder 2, having the plurality of segments and the one or more peripheral engagement portions (or securing areas), arranged in the deflated condition above the first semi-finished product (Figure 12),
- securing the bladder 2 to the first semi-finished product,
- arranging a second semi-finished product of sheet material above the bladder 2,
- securing the second semi-finished product to the bladder 2 and to the first semi-finished product in such a way that the first and second semi-finished product define the casing 3 in which the bladder 2 is housed (Figure 14).

The first semi-finished product, following the securing step with the second semi-finished product, defines the first covering 4 of the casing while the second semi-finished product defines the second covering 5 of the casing. The securing steps may be performed by means of a sewing operation that produces the seams C shown in Figures 12 and 14.

The method, prior to the step of laying the second semi-finished product may comprise the steps of:
- laying an auxiliary semi-finished product of sheet material above the bladder 2,
- securing the auxiliary semi-finished product to at least one of the first semi-finished product and the bladder 2.

The bladder 2 is interposed between the first semi-finished product and the auxiliary semi-finished product. The step of laying the second semi-finished product above the bladder 2 provides for laying the second semi-finished product directly above the auxiliary semi-finished product. The auxiliary semi-finished product is directly interposed between the bladder 2 and the second semi-finished product.

The step of securing the second semi-finished product to the bladder 2 and to the first semi-finished product further involves securing the second semi-finished product to the auxiliary semi-finished product in such a way that the first and second semi-finished product define the casing 3 having a compartment V in which the bladder 2 is housed, while the auxiliary semi-finished product defines the auxiliary covering 30.

The securing steps involve a sewing operation divided into two stages. The first sewing is performed following the superimposition of the first semi-finished product, the bladder 2, and the auxiliary semi-finished product. This first sewing is performed at the peripheral engagement portions (or securing areas) of the segments 2', i.e. at a distance from the peripheral portion of the auxiliary semi-finished product and of the first semi-finished product. Following the first sewing step, the second semi-finished product is laid above the auxiliary semi-finished product, and a second sewing step is performed at the peripheral portions of the first and second semi-finished product. The second sewing step defines the closed casing 3 in which the bladder 2 and the auxiliary covering 30 are secured.

The first semi-finished product and the second semi-finished product, when laid out on an ideal plane, have respective perimetral edges that delimit respectively a first and second area. The ratio between said first and second area is comprised between 0.98 and 1.02, optionally substantially equal to 1. As shown for example in Figures 9, 11 and 12, the bladder 2 when laid out on an ideal plane has a perimetral edge substantially equal in shape and size to the perimetral edge of the first and second semi-finished product. The perimetral edge of the bladder may delimit a third area. The ratio between said third area and the first area of the first covering is comprised between 0.98 and 1.02, optionally substantially equal to 1. Also the auxiliary semi-finished product has a shape and size substantially equal to the first semi-finished product and therefore to the bladder 2. In particular, the auxiliary semi-finished product when laid out on an ideal plane has a perimetral edge that delimits a fourth area: the ratio between said fourth area and the first area of the first covering is comprised between 0.98 and 1.02, optionally substantially equal to 1. The ratio between the third area defined by the bladder and the fourth area defined by the auxiliary covering 30' is comprised between 0.98 and 1.02, optionally substantially equal to 1.

Upon completion of the securing steps, for example sewing, the first semi-finished product defines the first covering 4, the auxiliary semi-finished product defines the auxiliary covering 30 and the second semi-finished product defines the second covering 5.

The materials and the type of securing between the various components are those described above in relation to the protection device 1.

### Use of the Protection Device

The present disclosure also relates to a use of the protection device 1 for the protection of parts of the body of a user.

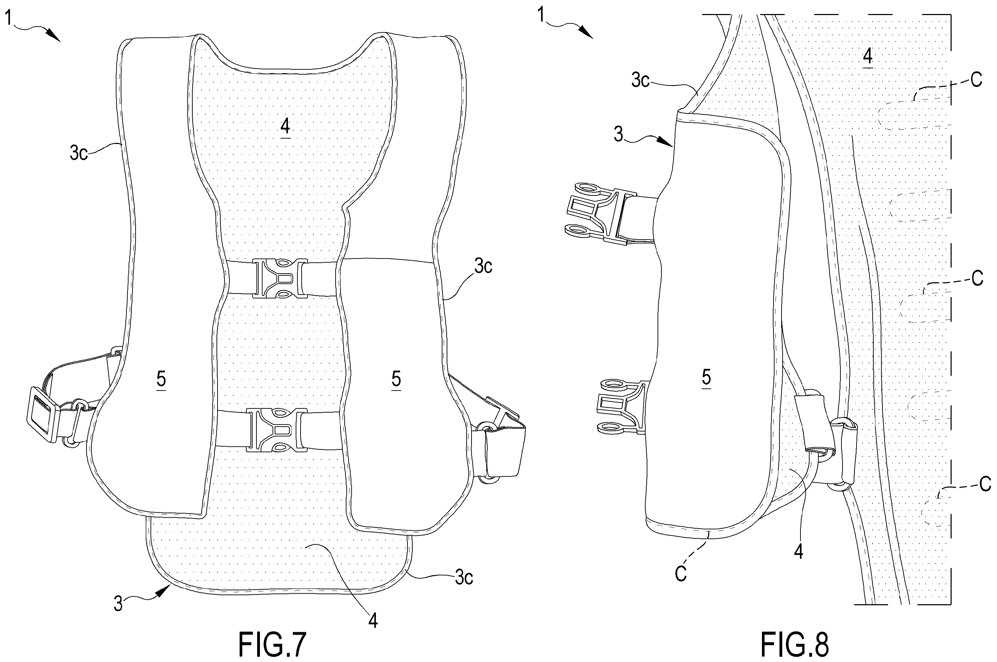

The protection device 1 may be employed in a garment comprising one or more wearable protection devices 1, wherein said one or more wearable protection devices 1 cover at least one of: the torso, the upper limbs, and the lower limbs of a user, optionally excluding the feet. For example, the protection device 1 may be an integral part of a suit (see for example the schematization of Figures 1 and 2), a jacket or a vest (Figures 3-8 and 10), or may be an integral part of an accessory for the protection of the body of a user (optionally at least one of: a back protector, a protection for the thorax, a protection for the shoulders, a protection for the neck, a protection for the head, a protection for the pelvis, a protection for the legs).

Alternatively, the protection device 1 may be of the type couplable (securable or engageable in a removable manner) to a garment or to a protection device for a user.

During use of the protection device, the first covering 4 of the casing 3 may be arranged on a user-facing side of the wearable garment and the second covering 5 may be arranged on an outward-facing side of the wearable garment, such that the bladder 2 inflates in a direction away from the user toward the second covering 5.

## Claims

1. Wearable protection device (1) comprising:
- a bladder (2) comprising a plurality of side-by-side segments (2') each of which extends along a respective extension trajectory (T), wherein each segment (2') comprises at least one wall of sheet material delimiting an internal volume and having a first and a second portion facing each other,
wherein the bladder (2), in particular at least one of said segments (2'), further comprises one or more peripheral engagement portions, wherein the bladder (2) is configurable between:
∘ a deflated condition in which the first and second portion of the at least one wall of each segment (2'), for a preponderant part of their surface extension, are close together and at least partly in contact with each other,
∘ an inflated condition in which the first and second portion of the at least one wall of each segment (2'), for a preponderant part of their surface extension, are spaced apart, wherein said at least one wall, in the inflated condition, defines an internal volume greater than the internal volume defined by the same wall in the deflated condition,
- a casing (3) comprising a first and a second covering (4, 5) of sheet material joined together at a peripheral portion of the casing to define a compartment (V) in which the plurality of segments is housed,
wherein at least one of said segments is secured, at a part of the peripheral engagement portion, to the first covering (4) at a zone spaced from the peripheral portion of the casing (3).

2. Wearable protection device according to claim 1, wherein each segment, at said one or more peripheral engagement portion, is solely secured, optionally by sewing, to the first covering (4) of the casing (3), while remaining detached from the second covering (5) of the casing (3).

3. Wearable protection device according to any one of the preceding claims, wherein the bladder (2) is non-removably secured to the first covering (4) of the casing (3) via said one or more peripheral engagement portions, wherein the bladder (2) is further non-removably secured to the casing (3) at the peripheral portion.

4. Wearable protection device according to any one of the preceding claims, wherein the at least one wall of each segment comprises a first wall (2a) and a second wall (2b) of sheet material, wherein the first wall (2a) has a central zone, which defines said first portion of the at least one wall, wherein the second wall (2b) has a central zone, which defines said second portion of the at least one wall,
wherein the first and the second wall (2a, 2b) of each segment are engaged with each other along said one or more peripheral engagement portions, each of which forming a respective peripheral edge (2c).

5. Wearable protection device according to the preceding claim, wherein each peripheral edge (2c) of a respective one of said one or more peripheral engagement portions has:
- a first and a second section (2c', 2c") arranged opposite one another and facing each other,
- one or more connecting segments (2c"') joining the first section (2c') to the second section (2c") at respective ends portions, optionally forming a circular or annular closed loop,
optionally wherein the bladder (2) includes one or more non-inflating chambers, each of which being perimetrally delimited by a respective peripheral edge (2c).

6. Wearable protection device according to any one of the two preceding claims, wherein each peripheral edge (2c) has an elongated shape extending along an extension trajectory (T), optionally rectilinear,
wherein the bladder includes a plurality of peripheral engagement portions having respective peripheral edges (2c) spaced apart from one another along a secondary direction (S) transverse, optionally orthogonal, to the extension trajectory (T),
wherein each peripheral edge (2c) separates two adjacent segments (2') of the bladder (2).

7. Wearable protection device according to the preceding claim, wherein a width of each segment (2), defined as a minimum distance between two adjacent peripheral edges (2c) along the secondary direction (S), is greater than a minimum distance between the first section (2c') and the second section (2c") of a peripheral edge (2c), or wherein the width of each segment (2) is less than the minimum distance between the first section (2c') and the second section (2c") of a peripheral edge (2c).

8. Wearable protection device according to any one of the preceding claims, wherein the casing (3), and optionally the first covering (4), is more rigid than the bladder (2), thereby having a lower capacity for elastic deformation than the bladder (2).

9. Wearable protection device according to any one of the preceding claims comprising at least one auxiliary covering (30) of sheet material arranged in the compartment (V) of the casing (3), wherein the auxiliary covering is interposed between the second covering (5) of the casing (3) and the bladder (2),
wherein the auxiliary covering (30) is superimposed on a preponderant part, optionally the entirety, of each segment and is placed in contact, both in the inflated condition and in the deflated condition, with the bladder (2),
wherein the auxiliary covering (30) is secured, optionally by sewing, to a part, optionally the entirety, of the peripheral engagement portion of each segment that is secured to the first covering (4) while remaining detached from the second covering (5) of the casing (3),
wherein the auxiliary covering (30) is further secured to the casing (3) at the peripheral portion.

10. Wearable protection device according to the preceding claim, wherein the auxiliary covering (30) is configured to elastically deform during transition of the bladder from the deflated condition to the inflated condition, wherein the auxiliary covering (30), optionally the material of the auxiliary covering, is less elastically deformable than the bladder, optionally than the material of the bladder,
optionally a material of the auxiliary covering (30) has an elongation percentage greater than 100%, optionally comprised between 120 and 250%,
wherein the auxiliary covering (30) is made of a material less rigid than a material of the casing (3), thereby having a higher capacity for elastic deformation than the casing (3).

11. Wearable protection device according to any one of the two preceding claims when depending on claim 6, wherein the auxiliary covering (30) is made of fabric material having a warp and a weft, wherein one of the warp and the weft, which exhibits greater elastic elongation than the other, extends parallel to the secondary direction (S).

12. Wearable protection device according to any one of the preceding claims, wherein the bladder (2) includes at least one connecting section (20) that places in fluid communication two adjacent segments (2') of the plurality of side-by-side segments,
wherein the connecting section (20) extends parallel to a/the secondary direction (S) transverse, optionally orthogonal, to the extension trajectory (T) of the segments (2'),
optionally wherein the connecting section (20) is inflatable,
wherein when the present claim depends on claim 5, the at least one connecting section (20) is laterally delimited on opposite sides by a connecting segment (2c"') of a peripheral edge (2c) and by the peripheral portion of the casing (3), respectively.

13. Wearable protection device according to the preceding claim, wherein the bladder (2) includes a plurality of connecting sections (20), each of which placing in fluid communication two adjacent segments (2') of said plurality of side-by-side segments (2'),
wherein the connecting sections (20) are arranged at longitudinal ends of the segments (2') along the extension trajectory (T),
wherein each connecting section (20) includes a first and a second connecting section arranged opposite to each other along the extension trajectory (T) to connect respective opposite longitudinal ends of two adjacent segments (2').

14. Use of a garment comprising one or more wearable protection devices (1) according to any one of the preceding claims, wherein said one or more wearable protection devices (1) cover at least one of: the torso, the upper limbs and the lower limbs of a user, excluding the feet.

15. Use of the garment according to the preceding claim, wherein the first covering (4) of the casing (3) is arranged on a user-facing side of the wearable garment and the second covering (5) is arranged on an outward-facing side of the wearable garment, such that the bladder (2) inflates in a direction away from the user toward the second covering (5).
